(19) Europäisches Patentamt
European Patent Office
Office européen des brevets

(11) **EP 4 159 038 A1**

(12) **EUROPEAN PATENT APPLICATION**

(43) Date of publication:
**05.04.2023 Bulletin 2023/14**

(21) Application number: **21200587.0**

(22) Date of filing: **01.10.2021**

(51) International Patent Classification (IPC):
***A01N 43/08** (2006.01)*

(52) Cooperative Patent Classification (CPC):
**A01N 43/08; A01P 1/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Clariant International Ltd**
**4132 Muttenz (CH)**

(72) Inventors:
- **SCHAAL, Petra**
  **65926 Frankfurt am Main (DE)**
- **SCHERL, Franz-Xaver**
  **84508 Burgkirchen (DE)**
- **GROHMANN, Joerg Peter**
  **65926 Frankfurt am Main (DE)**

(74) Representative: **Kampen, Daniela**
**Clariant Produkte (Deutschland) GmbH**
**Patent & License Management Chemicals**
**Industriepark Höchst / G 860**
**65926 Frankfurt am Main (DE)**

(54) **COMPOSITION FOR INHIBITING MICROORGANISMS**

(57) The present invention relates to a composition for inhibiting microorganisms, as well as related compounds, processes, formulations, concentrates and uses. The composition comprises at least 30 wt.-% compound X, wherein compound X is according to Formula (I):

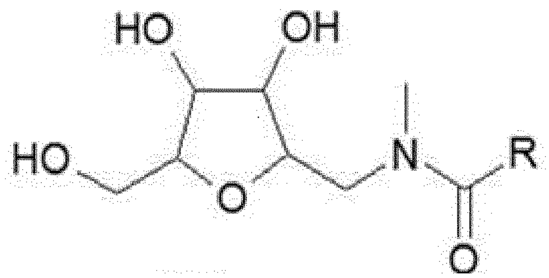

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

EP 4 159 038 A1

**Description**

FIELD OF THE INVENTION

The present invention relates to a composition for inhibiting microorganisms, as well as to related compounds, processes, formulations, concentrates and uses.

BACKGROUND OF THE INVENTION

Preservation of household formulations and cosmetic formulations extends their shelf life and therefore provides greater value for money for consumers.

Furthermore, preservatives prevent consumers from distributing microbes around their home or on themselves and hence provide health benefits. Anti-microbial agents are well-described in the art and there are many available that provide excellent performance.

Klug et al. in US-2012/0100085A1 discloses liquid compositions which contain a) from 5 to 95 % by weight of sorbitan monocaprylate and b) from 5 to 95 % by weight of one or more alcohols of the formula (1) disclosed therein. Klug et al. discusses in §4 the objective of keeping the total amount of anti-microbially active alcohols in the cosmetic, dermatological or pharmaceutical formulation low and finding a dermatologically and toxicologically harmless substance that supports the anti-microbial action of the anti-microbially active alcohols in a synergistic manner. Klug et al. then goes on to state that it has been found that the sorbitan monocaprylate already known and used in cosmetics as a surfactant and emulsifying agent fulfills exactly these conditions.

However, there is a desire for providing an array of sophisticated preservation systems whereby excellent anti-microbial performance is provided and yet keeping the levels of preservation actives to a minimum. In line with the statements of Klug et al., many well-known preservation actives having excellent efficacy are not preferred e.g. due to reduced consumer acceptance, health worries or due to regulatory restrictions. The levels of such actives may also be (legally) restricted for the same reasons. Furthermore, there is a desire for all elements of preservation systems to meet sustainability goals and ensure that household formulations and cosmetic formulations are as environmentally friendly as possible.

There is thus a need to provide even more sophisticated preservation systems, and elements thereof, that provide excellent anti-microbial effects and yet are highly accepted by consumers, do not raise health or regulatory concerns, and have excellent sustainability and environmentally friendly profiles.

SUMMARY OF THE INVENTION

The present invention relates to a composition for inhibiting microorganisms wherein the composition comprises at least 30 wt.-% compound X, wherein compound X is according to Formula (I):

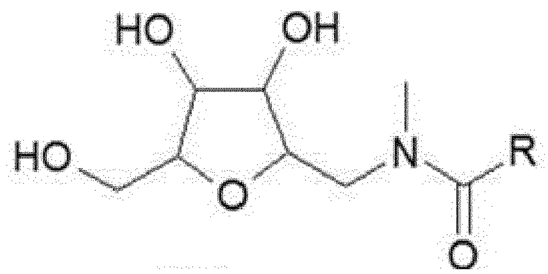

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

The present invention also relates to related compounds, processes, formulations, concentrates and uses.

DETAILED DESCRIPTION OF THE INVENTION

Definitions and General

In this document, including in all embodiments of all aspects of the present invention, the following definitions apply unless specifically stated otherwise. All percentages are by weight (w/w) of the total composition. All ratios are

weight ratios. "wt.-%" means percentage by weight. References to 'parts' e.g. a mixture of 1 part X and 3 parts Y, is a ratio by weight. "QS" or "QSP" means sufficient quantity for 100 % or for 100 g. +/- indicates the standard deviation. All ranges are inclusive and combinable. The number of significant digits conveys neither a limitation on the indicated amounts nor on the accuracy of the measurements. All measurements are understood to be made at 23°C and at ambient conditions, where "ambient conditions" means at 1 atmosphere (atm) of pressure and at 50 % relative humidity. "Relative humidity" refers to the ratio (stated as a percent) of the moisture content of air compared to the saturated moisture level at the same temperature and pressure. Relative humidity can be measured with a hygrometer, in particular with a probe hygrometer from VWR® International. Herein "min" means "minute" or "minutes". Herein "mol" means mole. Herein "g" following a number means "gram" or "grams". "Ex." means "example". Herein, "comprising" means that other steps and other ingredients can be in addition. "Comprising" encompasses the terms "consisting of" and "consisting essentially of". The compositions, formulations, methods, uses, and processes of the present invention can comprise, consist of, and consist essentially of the elements and limitations of the invention described herein, as well as any of the additional or optional ingredients, components, steps, or limitations described herein. Embodiments and aspects described herein may comprise or be combinable with elements, features or components of other embodiments and/or aspects despite not being expressly exemplified in combination, unless an incompatibility is stated. "In at least one embodiment" means that one or more embodiments, optionally all embodiments or a large subset of embodiments, of the present invention has/have the subsequently described feature. Where amount ranges are given, these are to be understood as being the total amount of said ingredient in the composition, or where more than one species fall within the scope of the ingredient definition, the total amount of all ingredients fitting that definition, in the composition.

"Molecular weight" or "M.Wt." or "MW" and grammatical equivalents mean the number average molecular weight.

"Viscosity" is measured at 25°C using a HAAKE Rotation Viscometer VT 550 with cooling/heating vessel and sensor systems according to DIN 53019 at a shear rate of 12.9 $s^{-1}$.

"Water-soluble" refers to any material that is sufficiently soluble in water to form a clear solution to the naked eye at a concentration of 0.1 % by weight of the material in water at 25°C. The term "water-insoluble" refers to any material that is not "water-soluble".

"Dry" or "substantially dry" means comprising less than 5 %, less than 3 %, less than 2 %, less than 1 %, or about 0 % of any compound or composition being in liquid form when measured at 25°C at ambient conditions. Such compounds or compositions being in liquid form include water, oils, organic solvents and other wetting agents. "Anhydrous" means that the composition comprises less than 5 %, less than 3 %, less than 2 %, less than 1 %, or about 0 % water by total weight of the composition.

"Substantially free from" or "substantially free of" means less than 1 %, or less than 0.8 %, or less than 0.5 %, or less than 0.3 %, or about 0 %, by total weight of the composition or formulation.

"Derivatives" includes but is not limited to, amide, ether, ester, amino, carboxyl, acetyl, acid, salt and/or alcohol derivatives of a given compound. In at least one embodiment, "derivatives thereof" means the amide, ether, ester, amino, carboxyl, acetyl, acid, salt and alcohol derivatives.

"Monomer" means a discrete, non-polymerized chemical moiety capable of undergoing polymerization in the presence of an initiator or any suitable reaction that creates a macromolecule e.g. such as polycondensation, polyaddition, anionic or cationic polymerization. "Unit" means a monomer that has already been polymerized i.e. is part of a polymer.

"Polymer" means a chemical formed from the polymerization of two or more monomers. The term "polymer" shall include all materials made by the polymerization of monomers as well as natural polymers. Polymers made from only one type of monomer are called homopolymers. Herein, a polymer comprises at least two monomers. Polymers made from two or more different types of monomers are called copolymers. The distribution of the different monomers can be random, alternating or block-wise (i.e. block copolymer). The term "polymer" used herein includes any type of polymer including homopolymers and copolymers.

"Hairstyling polymer" means a hair-fixing polymer which forms a film on a surface, i.e. a film-forming polymer. 'Hairstyling polymer' and 'film-forming polymer' are used interchangeably in the art. In the context of hair science, this surface is the surface of individual hair fibres or a plurality thereof. The hairstyling polymer causes the hair fibres to be glued together to build welds, which are effectively crosslinks that provide the hold benefit. In concert, these welds form a 'hairnet' to provide hair hold and volume benefits to the consumer. When the net of welds is effectively formed, the hold and volume benefits can last all day and offer good resistance to environmental humidity.

Explanation of and benefits provided by the invention

The present invention relates to a composition for inhibiting microorganisms wherein the composition comprises compound X. Compound X refers to a specific type of fatty N-methyl cyclic glucamides. Surprisingly, it has now been found that such specific fatty N-methyl cyclic glucamides are capable of inhibiting the growth of microorganisms.

WO2018/002100 discloses that fatty N-methyl cyclic glucamides which are derived from C8- and/or C10-fatty acids effectively inhibit the growth of microorganisms. Commonly used preservative boosters, such as sorbitan caprylate,

caprylyl glycol or ethylhexylglycerin, also have eight carbon atoms in the alkyl chain. It was unexpected that fatty N-methyl cyclic glucamides which are derived from fatty acids having longer carbon chains effectively inhibit the growth of microorganisms as well.

The fatty N-methyl cyclic glucamides of the present invention are alkyl chain polyols and represent amphiphilic compounds. The hydrophobic alkyl chain and the hydrophilic head group drive compound X into the interphases of oil/water, water/air, or water/phospholipid layers. The surface tension is thereby reduced. This allows interaction with cell walls, e.g. of microorganisms, and plays an important synergistic role in the mechanism of action of traditional preservatives. Compound X can stabilize oil/water interphases, e.g. by emulsifying or solubilising hydrophobic ingredients in polar solvents or modifying the viscosity of surfactant-based systems/surfactant solutions.

Regulatory restrictions in the field of preservation have led to a smaller toolbox for formulators to preserve their formulations effectively. Synthetic and petroleum-based ingredients have been under public scrutiny for many reasons, e.g. sustainability, safety, impurities, non-environmentally friendly processes, waste generation, slow biodegradability, bad reputation among consumers. Lower amounts of preservatives have to be supported/improved in their preservation efficacy in order to provide sufficient protection against contamination of the formulation with microorganisms. Preservative boosters are used to overcome the gap in efficacy due to a reduction in the level of classical preservative used and to boost the efficacy of preservatives synergistically. Commonly used preservative boosters are poorly water-soluble or completely water-insoluble. This makes formulating them difficult, as most formulations contain a high amount of water. Solubilisers may have to be used to keep the ingredient in the formulation. Via the present invention, the cost of solubilisers can be saved, reducing formulation complexity and reducing storage need for more ingredients.

The present invention provides the formulator with an excellent choice when deciding on a means for preserving the formulation. The fatty N-methyl cyclic glucamides of the present invention effectively inhibit the growth of microorganisms. Compound X is water-soluble; it can be dissolved at 1 % in water to obtain a clear solution. Furthermore, compound X is stable at a pH range of pH 4 to 9. The amide bond provides superior stability versus commonly used esters. Compound X can be synthesized in a cost-effective manner without the need for process aids (during amidation). The fatty N-methyl cyclic glucamides of the present invention are based on the renewable raw materials glucose and fatty acids. Accordingly, the present invention offers a more sustainable solution, which is also more sustainable than commonly used boosters such as ethylhexylglycerin (EHG). Due to their surfactant-like structure, the fatty N-methyl cyclic glucamides of the present invention can act as hydrotropes and also as wetting agents. Furthermore, they can act as emulsifiers due to their high HLB non-ionic surfactant-like structure and as solubilisers for the same reason.

The details of the invention and its aspects are provided hereinafter.

First Aspect

The first aspect relates to a composition for inhibiting microorganisms wherein the composition comprises at least 30 wt.-% compound X, wherein compound X is according to Formula (I):

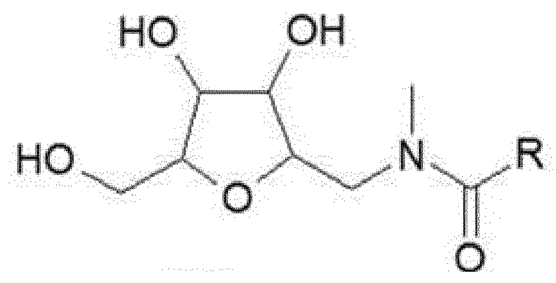

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

Compound X is a specific type of fatty N-methyl cyclic glucamide. Formula (I) encompasses multiple species of such specific fatty N-methyl cyclic glucamides wherein R is selected from saturated hydrocarbon chains having 11 to 23 carbon atoms, unsaturated hydrocarbon chains having 11 to 23 carbon atoms, and - $(CH_2)_7CH=CH_2$, or wherein the R-C=O residue in Formula (I) is derived from coconut fatty acids.

In at least one embodiment, R in Formula (I) is selected from $-(CH_2)_{10}CH_3$, - $(CH_2)_{12}CH_3$, and mixtures thereof; or

R in Formula (I) is selected from $-(CH_2)_7CH=CH_2$, $-(CH_2)_7CH=CHCH_2CH_3$, and mixtures thereof; or
the R-C=O residue in Formula (I) is derived from coconut fatty acids.

In at least one embodiment, R in Formula (I) is selected from $-(CH_2)_{10}CH_3$, - $(CH_2)_{12}CH_3$, and mixtures thereof. In at least one embodiment, R in Formula (I) is selected from $-(CH_2)_7CH=CH_2$, $-(CH_2)_7CH=CHCH_2CH_3$, and mixtures thereof. In at least one embodiment, the R-C=O residue in Formula (I) is derived from coconut fatty acids. In at least one embodiment, the R-C=O residue in Formula (I) is derived from soybean fatty acids.

As used herein, the expression "the R-C=O residue in Formula (I) is derived from coconut fatty acids" preferably means that the carbon chain length distribution in the R-C=O residue in Formula (I) corresponds to the carbon chain length distribution of the fatty acids (e.g. bound as triglycerides) in coconut oil.

As used herein, the expression "the R-C=O residue in Formula (I) is derived from soybean fatty acids" preferably means that the carbon chain length distribution in the R-C=O residue in Formula (I) corresponds to the carbon chain length distribution of the fatty acids (e.g. bound as triglycerides) in soybean oil.

In at least one embodiment, compound X comprises (preferably is) a mixture of compounds according to Formula (I) wherein R is $-(CH_2)_{10}CH_3$ and $-(CH_2)_{12}CH_3$, respectively. In other words, in at least one embodiment, compound X comprises (preferably is) a mixture of compounds according to Formula (I) wherein R is - $(CH_2)_{10}CH_3$ and compounds according to Formula (I) wherein R is $-(CH_2)_{12}CH_3$. Preferably, the weight ratio of compounds according to Formula (I) wherein R is - $(CH_2)_{10}CH_3$ and compounds according to Formula (I) wherein R is $-(CH_2)_{12}CH_3$ is from 3:7 to 7:3, more preferably from 4:6 to 6:4. Also preferably, the weight ratio of compounds according to Formula (I) wherein R is $-(CH_2)_{10}CH_3$ and compounds according to Formula (I) wherein R is $-(CH_2)_{12}CH_3$ is from 4:1 to 1:1, more preferably from 3:1 to 2:1, even more preferably from 2.5:1.0 to 2.0:1.0, for example 7:3.

In at least one embodiment, compound X comprises (preferably is) a mixture of compounds according to Formula (I) wherein R is $-(CH_2)_7CH=CH_2$ and - $(CH_2)_7CH=CHCH_2CH_3$, respectively. In other words, in at least one embodiment, compound X comprises (preferably is) a mixture of compounds according to Formula (I) wherein R is $-(CH_2)_7CH=CH_2$ and compounds according to Formula (I) wherein R is $-(CH_2)_7CH=CHCH_2CH_3$. Preferably, the weight ratio of compounds according to Formula (I) wherein R is $-(CH_2)_7CH=CH_2$ and compounds according to Formula (I) wherein R is $-(CH_2)_7CH=CHCH_2CH_3$ is from 3:7 to 7:3, more preferably from 4:6 to 6:4.

In at least one embodiment, the composition comprises at least 40 wt.-%, preferably at least 50 wt.-%, more preferably at least 60 wt.-%, even more preferably at least 70 wt.-%, even more preferably at least 80 wt.-%, most preferably at least 90 wt.-% compound X.

In at least one embodiment, the composition comprises a sole compound X according to Formula (I) wherein R is selected from saturated hydrocarbon chains having 11 to 23 carbon atoms, unsaturated hydrocarbon chains having 11 to 23 carbon atoms, and $-(CH_2)_7CH=CH_2$. In other words, the composition may comprise only one type of compound X according to Formula (I) wherein R is selected from saturated hydrocarbon chains having 11 to 23 carbon atoms, unsaturated hydrocarbon chains having 11 to 23 carbon atoms, and $-(CH_2)_7CH=CH_2$. Having such a pure composition has the benefit that the chemical interactions with other ingredients can be more easily predicted. Furthermore, it is more desirable for consumers when an ingredient relates to one type of molecule rather than a more complex mixture.

In at least one embodiment, compound X is a mixture of different compounds according to Formula (I) wherein R is selected from saturated hydrocarbon chains having 11 to 23 carbon atoms, unsaturated hydrocarbon chains having 11 to 23 carbon atoms, and $-(CH_2)_7CH=CH_2$, or wherein the R-C=O residue in Formula (I) is derived from coconut fatty acids. Employing a mixture of different compounds has the benefit that purification steps can be avoided and/or more varied starting materials can be used. Indeed, increased purity normally correlates with increased expense. Hence, a mixture of compounds may provide economic benefits.

In at least one embodiment, the composition is an aqueous solution.

In at least one embodiment, the composition comprises solvent. In at least one embodiment, the composition comprises a solvent, wherein the solvent comprises water and/or alcohol. Solvent is useful for providing the compounds used in present invention in liquid form. In at least one embodiment, the solvent is cosmetically acceptable. In at least one embodiment, the composition comprises at least 10 wt.-%, preferably at least 20 wt.-%, more preferably at least 30 wt.-%, even more preferably at least 50 wt.-% water. Water is useful for economic reasons but also because it is cosmetically acceptable. Optionally, the composition comprises water-miscible or water-soluble solvents, such as lower alkyl alcohols. In at least one embodiment, the composition comprises C1-C5 alkyl monohydric alcohols, preferably C2-C3 alkyl monohydric alcohols. The alcohols which may be present are in particular lower monohydric or polyhydric alcohols having 1 to 4 carbon atoms customarily used for cosmetic purposes, such as preferably ethanol or isopropanol.

Optionally, the composition comprises a water-soluble polyhydric alcohol. In at least one embodiment, the water-soluble polyhydric alcohols are polyhydric alcohols having two or more hydroxyl groups in the molecule. In at least one embodiment, the water-soluble polyhydric alcohol is selected from the group consisting of: dihydric alcohols such as ethylene glycol, propylene glycol, trimethylene glycol, 1,2-butylene glycol, 1,3-butylene glycol, 1,4-butylene glycol, tetramethylene glycol, 2,3-butylene glycol, pentamethylene glycol, 2-butene-1,4-diol, hexylene glycol, octylene glycol; trihydric alcohols such as glycerine, trimethylol propane, 1,2,6-hexanetriol and the like; tetrahydric alcohols such as pentaerythritol; pentahydric alcohols such as xylytol; hexahydric alcohols such as sorbitol, mannitol; polyhydric alcohol polymers such as diethylene glycol, dipropylene glycol, polyethylene glycol, polypropylene glycol, tetraethylene glycol,

diglycerine, polyethylene glycol, triglycerine, tetraglycerine, polyglycerine; dihydric alcohol alkyl ethers such as ethylene glycol monomethyl ether, ethylene glycol monoethyl ether, ethylene glycol monobutyl ether, ethylene glycol monophenyl ether, ethylene glycol monohexyl ether, ethylene glycol mono-2-methylhexyl ether, ethylene glycol isoamyl ether, ethylene glycol benzyl ether, ethylene glycol isopropyl ether, ethylene glycol dimethyl ether, ethylene glycol diethyl ether, ethylene glycol dibutyl ether; dihydric alcohol alkyl ethers such as diethylene glycol monomethyl ether, diethylene glycol monoethyl ether, diethylene glycol monobutyl ether, diethylene glycol dimethyl ether, diethylene glycol diethyl ether, diethylene glycol butyl ether, diethylene glycol methyl ethyl ether, triethylene glycol monomethyl ether, triethylene glycol monoethyl ether, propylene glycol monomethyl ether, propylene glycol monoethyl ether, propylene glycol monobutyl ether, propylene glycol isopropyl ether, dipropylene glycol methyl ether, dipropylene glycol ethyl ether, dipropylene glycol butyl ether; dihydric alcohol ether esters such as ethylene glycol monomethyl ether acetate, ethylene glycol monoethyl ether acetate, ethylene glycol monobutyl ether acetate, ethylene glycol monophenyl ether acetate, ethylene glycol diadipate, ethylene glycol disuccinate, diethylene glycol monoethyl ether acetate, diethylene glycol monobutyl ether acetate, propylene glycol monomethyl ether acetate, propylene glycol monoethyl ether acetate, propylene glycol monopropyl ether acetate, propylene glycol monophenyl ether acetate; glycerine monoalkyl ethers such as xyl alcohol, selachyl alcohol, batyl alcohol; sugar alcohols such as sorbitol, maltitol, maltotriose, mannitol, sucrose, erythritol, glucose, fructose, starch sugar, maltose, xylytose, starch sugar reduced alcohol, glysolid, tetrahydrofurfuryl alcohol, POE tetrahydrofurfuryl alcohol, POP butyl ether, POP POE butyl ether, tripolyoxypropylene glycerine ether, POP glycerine ether, POP glycerine ether phosphoric acid, POP POE pentaerythritol ether, and mixtures thereof.

In a preferred embodiment, the composition comprises a solvent selected from the group consisting of water, glycols, ethanol, and mixtures thereof. In a preferred embodiment, the composition comprises water.

In a preferred embodiment, the composition comprises an aqueous, alcoholic or aqueous-alcoholic solvent, wherein the aqueous, alcoholic or aqueous-alcoholic solvent comprises water, ethanol, propanol, isopropanol, 1,2-propylene glycol, 1,3-propylene glycol, isobutanol, butanol, butyl glycol, butyl diglycol, glycerol, or mixtures thereof; preferably wherein the aqueous, alcoholic or aqueous-alcoholic solvent comprises water, ethanol, propanol, isopropanol, 1,2-propylene glycol, 1,3-propylene glycol, glycerol, or mixtures thereof; more preferably wherein the aqueous, alcoholic or aqueous-alcoholic solvent comprises water, isopropanol, 1,2-propylene glycol, 1,3-propylene glycol, or mixtures thereof; even more preferably wherein the aqueous, alcoholic or aqueous-alcoholic solvent consists of water or consists of a mixture of water and an alcohol wherein the alcohol is selected from the group consisting of isopropanol, 1,2-propylene glycol and 1,3-propylene glycol.

Natural solvents can also be used. In at least one embodiment, the composition comprises a solvent selected from the group consisting of plant oil, honey, plant-derived sugar compositions, and mixtures thereof.

In at least one embodiment, the composition is a pumpable liquid. In at least one embodiment, the composition is paste-like.

In at least one embodiment, the viscosity of the composition is from 1 mPa.s to 20,000 mPa.s.

In at least one embodiment, the composition, besides compound X, is substantially free of any anti-microbial agent. Anti-microbial agents are discussed in more detail in the third aspect.

Example Embodiments of the First Aspect:

In a preferred embodiment, the first aspect relates to a composition for inhibiting microorganisms wherein the composition comprises at least 60 wt.-% compound X, wherein compound X is according to Formula (I):

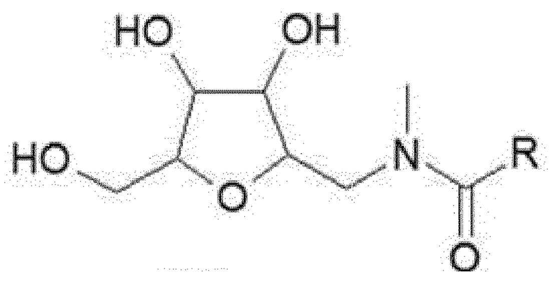

(I)

wherein R is selected from $-(CH_2)_{10}CH_3$, $-(CH_2)_{12}CH_3$, and mixtures thereof. Preferably, the composition is an aqueous solution.

In a preferred embodiment, the first aspect relates to a composition for inhibiting microorganisms wherein the composition comprises at least 60 wt.-% compound X, wherein compound X is according to Formula (I):

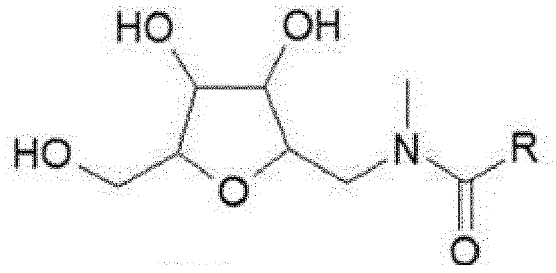

(I)

wherein R is selected from $-(CH_2)_7CH=CH_2$, $-(CH_2)_7CH=CHCH_2CH_3$, and mixtures thereof. Preferably, the composition is an aqueous solution.

In a preferred embodiment, the first aspect relates to a composition for inhibiting microorganisms wherein the composition comprises at least 60 wt.-% compound X, wherein compound X is according to Formula (I):

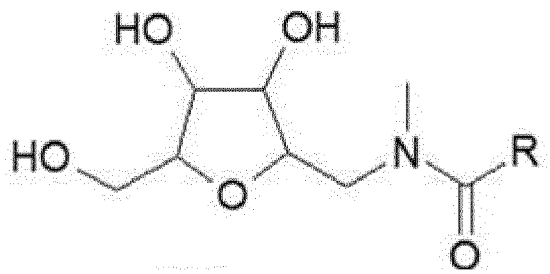

(I)

wherein the R-C=O residue in Formula (I) is derived from coconut fatty acids. Preferably, the composition is an aqueous solution.

Second Aspect

A second aspect relates to a process for synthesizing the composition according to the first aspect.

A second aspect relates to a process for synthesizing a composition as defined in the first aspect, wherein the process comprises:

(a) contacting N-methyl-glucamine with one or more carboxylic acids R-COOH to form a reaction blend;
(b) heating the reaction blend to boil off any water;
(c) allowing the reaction blend to react for at least 1 hour.

Typically, R in the "one or more carboxylic acids R-COOH" is defined as R in Formula (I).

Optionally, the process comprises:
(d) isolating the composition as defined in the first aspect.

N-methyl-glucamine is commercially available (e.g. from Sigma-

Aldrich) or can be prepared by methods known in the art. Carboxylic acids R-COOH are commercially available or can be prepared by methods known in the art.

"Reaction blend" is to be understood as a mixture of starting materials and optionally any solvents or other materials employed in or useful for the reaction. In at least one embodiment, the N-methyl-glucamine is added as an aqueous solution. In at least one embodiment, the reaction blend in step (a) comprises water.

In at least one embodiment, the heating in step (b) occurs by heating the reaction mixture to at least 100°C, more preferably at least 110°C, even more preferably at least 115°C, particularly preferably from 120°C to 150°C.

In at least one embodiment, the heating in step (b) occurs under vacuum. In at least one embodiment, the vacuum conditions are at least 20 mbar pressure. In at least one embodiment, the vacuum conditions are from 20 mbar to 50 mbar pressure, preferably from 25 mbar to 40 mbar pressure, more preferably from 25 mbar to 35 mbar pressure, particularly preferably about 30 mbar pressure.

In at least one embodiment, the step (c) occurs for at least 2 hours, more preferably at least 3 hours, even more preferably at least 4 hours, most preferably at least 6 hours.

In at least one embodiment, the step (c) occurs at at least 100°C, more preferably at least 110°C, even more

preferably at least 115°C, even more preferably from 120°C to 180°C, most preferably from 140°C to 170°C.

In at least one embodiment, the step (c) occurs with stirring and under nitrogen gas.

During the synthesis process, a number of by-products may be formed. An example of a by-product is a compound according to Formula (2):

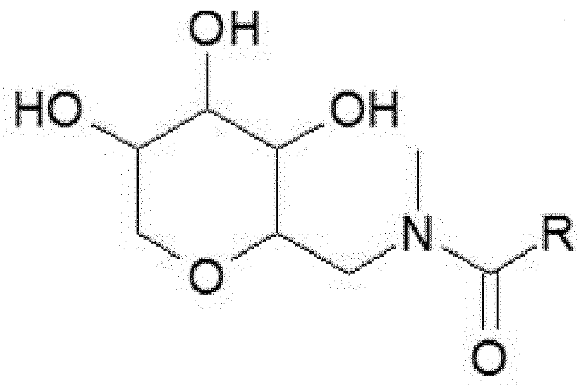

(2)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

Another example of a by-product is a compound according to Formula (3):

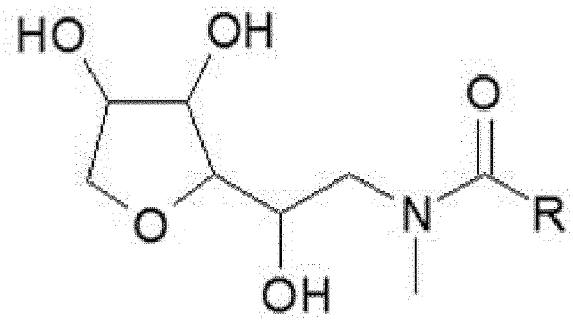

(3)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

The compounds according to Formulae (2) and (3) are typically generated in the process at low levels, e.g. less than 10 wt.-% by total weight of the composition. The compounds according to Formulae (2) and (3) may also have anti-microbial activity.

Other by-products that may be generated include: fatty esters of N-methyl cyclic glucamine; linear fatty N-methyl-glucamides; linear fatty N-methyl-diglucamides (i.e. two glucose moieties as the polar head group).

Example Embodiments of the Second Aspect:

In at least one embodiment, the second aspect relates to a process for synthesizing a composition as defined in the first aspect, wherein the process comprises:

(a) providing a hot melt of N-methyl-glucamine at a temperature of at least 100°C;

(b) contacting the hot melt of N-methyl-glucamine with one or more carboxylic acids R-COOH to form a reaction blend;

(c) heating the reaction blend to boil off any water, preferably by heating the reaction blend to at least 100°C, more preferably at least 110°C, even more preferably at least 115°C, most preferably from 120°C to 150°C;

(d) allowing the reaction blend to react for at least 1 hour, preferably at least 2 hours, more preferably at least 3 hours, even more preferably at least 4 hours, most preferably at least 6 hours;

(e) optionally isolating the composition as defined in the first aspect.

In at least one embodiment, the process comprises:

(a) providing an aqueous solution of N-methyl-glucamine;
(b) creating a hot melt of N-methyl-glucamine at a temperature of at least 100°C by boiling off the water from the aqueous solution of N-methyl-glucamine;
(c) contacting the hot melt of N-methyl-glucamine with one or more carboxylic acids R-COOH to form a reaction blend;
(d) heating the reaction blend to at least 100°C, preferably at least 110°C, more preferably at least 115°C, even more preferably from 120°C to 150°C;
(e) allowing the reaction blend to react for at least 1 hour, preferably at least 2 hours, more preferably at least 3 hours;
(f) optionally isolating the composition as defined in the first aspect.

In at least one embodiment, the process comprises:

(a) providing an aqueous solution of N-methyl-glucamine;
(b) creating a hot melt of N-methyl-glucamine at a temperature of at least 100°C by boiling off the water from the aqueous solution of N-methyl- glucamine;
(c) contacting the hot melt of N-methyl-glucamine with one or more carboxylic acids R-COOH to form a reaction blend, wherein the contacting occurs at a temperature of at least 100°C, preferably at least 110°C, more preferably at least 115°C, even more preferably from 120°C to 150°C;
(d) allowing the reaction blend to react for at least 1 hour, preferably at least 2 hours, more preferably at least 3 hours, and at a temperature of at least 100°C, preferably at least 110°C, more preferably at least 115°C, even more preferably from 120°C to 150°C, and with stirring and under nitrogen gas;
(e) optionally isolating the composition as defined in the first aspect.

Third Aspect

A third aspect relates to an anti-microbial concentrate comprising:

- compound X, wherein compound X is according to Formula (I):

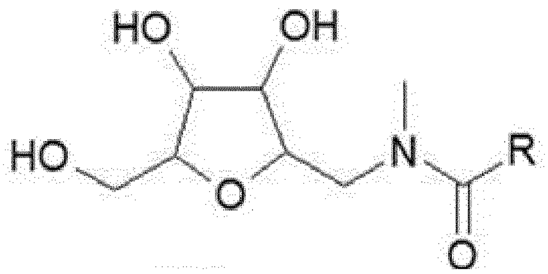

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids; and
- an anti-microbial agent.

In at least one embodiment, R in Formula (I) is selected from $-(CH_2)_{10}CH_3$, $-(CH_2)_{12}CH_3$, and mixtures thereof; or

R in Formula (I) is selected from $-(CH_2)_7CH=CH_2$, $-(CH_2)_7CH=CHCH_2CH_3$, and mixtures thereof; or
the R-C=O residue in Formula (I) is derived from coconut fatty acids.

In at least one embodiment, R in Formula (I) is selected from $-(CH_2)_{10}CH_3$, $-(CH_2)_{12}CH_3$, and mixtures thereof. In at least one embodiment, R in Formula (I) is selected from $-(CH_2)_7CH=CH_2$, $-(CH_2)_7CH=CHCH_2CH_3$, and mixtures thereof. In at least one embodiment, the R-C=O residue in Formula (I) is derived from coconut fatty acids. In at least one embodiment, the R-C=O residue in Formula (I) is derived from soybean fatty acids.

In at least one embodiment, compound X comprises (preferably is) a mixture of compounds according to Formula (I) wherein R is $-(CH_2)_{10}CH_3$ and $-(CH_2)_{12}CH_3$, respectively. In other words, in at least one embodiment, compound X comprises (preferably is) a mixture of compounds according to Formula (I) wherein R is - $(CH_2)_{10}CH_3$ and compounds according to Formula (I) wherein R is $-(CH_2)_{12}CH_3$. Preferably, the weight ratio of compounds according to Formula (I) wherein R is - $(CH_2)_{10}CH_3$ and compounds according to Formula (I) wherein R is $-(CH_2)_{12}CH_3$ is from 3:7 to 7:3, more preferably from 4:6 to 6:4. Also preferably, the weight ratio of compounds according to Formula (I) wherein R is $-(CH_2)_{10}CH_3$ and compounds according to Formula (I) wherein R is $-(CH_2)_{12}CH_3$ is from 4:1 to 1:1, more preferably from 3:1 to 2:1, even more preferably from 2.5:1.0 to 2.0:1.0, for example 7:3.

In at least one embodiment, compound X comprises (preferably is) a mixture of compounds according to Formula (I) wherein R is $-(CH_2)_7CH=CH_2$ and - $(CH_2)_7CH=CHCH_2CH_3$, respectively. In other words, in at least one embodiment, compound X comprises (preferably is) a mixture of compounds according to Formula (I) wherein R is $-(CH_2)_7CH=CH_2$ and compounds according to Formula (I) wherein R is $-(CH_2)_7CH=CHCH_2CH_3$. Preferably, the weight ratio of compounds according to Formula (I) wherein R is $-(CH_2)_7CH=CH_2$ and compounds according to Formula (I) wherein R is $-(CH_2)_7CH=CHCH_2CH_3$ is from 3:7 to 7:3, more preferably from 4:6 to 6:4.

In at least one embodiment, the concentrate comprises from 1 wt.-% to 99 wt.-%, or from 5 wt.-% to 90 wt.-%, or from 5 wt.-% to 95 wt.-%, or from 20 wt.-% to 80 wt.-%, or from 30 wt.-% to 80 wt.-% compound X.

In at least one embodiment, the concentrate comprises from 1 wt.-% to 99 wt.-%, or from 5 wt.-% to 95 wt.-%, or from 10 wt.-% to 95 wt.-%, or from 20 wt.-% to 80 wt.-%, or from 20 wt.-% to 70 wt.-% anti-microbial agent.

In at least one embodiment, the concentrate comprises

- from 1 wt.-% to 99 wt.-%, preferably from 5 wt.-% to 95 wt.-%, more preferably from 10 wt.-% to 90 wt.-%, even more preferably from 20 wt.-% to 80 wt.-%, particularly preferably from 30 wt.-% to 70 wt.-% compound X; and
- from 1 wt.-% to 99 wt.-%, preferably from 5 wt.-% to 95 wt.-%, more preferably from 10 wt.-% to 90 wt.-%, even more preferably from 20 wt.-% to 80 wt.-%, particularly preferably from 30 wt.-% to 70 wt.-% anti-microbial agent.

In at least one embodiment, the weight ratio of compound X to the anti-microbial agent is from 0.5:9.5 to 9.5:0.5, preferably from 1:9 to 9:1, more preferably from 1:4 to 4:1, even more preferably from 1:2 to 2:1, particularly preferably from 1:1.5 to 1.5:1, for example 1:1.

In at least one embodiment, the anti-microbial agent is selected from the group consisting of: aromatic alcohols, organic acids and salts thereof, compounds according to Formula (P), alkyl diols, halogenated compounds, isothiazolinones, preservation boosters, and combinations thereof; wherein Formula (P) is as follows:

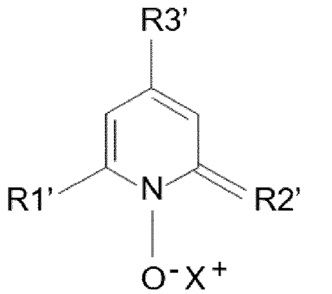

(P)

wherein

R1' is H, an unsubstituted or halogen-substituted, branched or unbranched $C_1$-$C_{20}$-alkyl radical, an unsubstituted or halogen-substituted $C_5$-$C_8$-cycloalkyl radical, an unsubstituted or halogen-substituted $C_6$-$C_{10}$-aryl radical or an unsubstituted or halogen-substituted, branched or unbranched $C_7$-$C_{20}$-aralkyl radical;
R2' is O or S;
R3' is H or a $C_1$-$C_4$-alkyl radical;
$X^+$ is a cation.

Preferably, R3' is methyl.

In at least one embodiment, the aromatic alcohols are selected from the group consisting of benzyl alcohol, phenoxyethanol, veratryl alcohol, propylene phenoxyethanol, phenethyl alcohol, phenylpropanol, vanillin, 2-methyl-1-phenyl-2-propanol, and combinations thereof.

In at least one embodiment, the organic acids and salts thereof are selected from the group consisting of benzoic acid, sorbic acid, dehydroacetic acid, lactic acid, salicylic acid, p-anisic acid, undecylenic acid, glycolic acid,

propionic acid, and combinations thereof.

In at least one embodiment, the compound according to Formula (P) is selected from the group consisting of 2-hydroxypyridine-N-oxide, 2-pyridinethiol-1-oxide and salts thereof, 1-hydroxy-4-methyl-6-(2,4,4-trimethylpentyl)-2(1H)-pyridone and salts thereof (preferably the monoethanolamine salt), and combinations thereof. Formula (P) discloses and encompasses the tautomeric equivalents of these compounds, since an equilibrium always exists. In at least one embodiment, the compound according to Formula (P) is piroctone olamine (octopirox).

In at least one embodiment, the alkyl diols are selected from the group consisting of 1,2-pentanediol, 1,2-hexanediol, 1,6-hexanediol, 1,2-octanediol, 1,2-decanediol, methylpropanediol, and combinations thereof.

In at least one embodiment, the halogenated compounds are selected from the group consisting of chlorhexidine and salts thereof, triclosan, chlorphenesin, trichlorcarban, chloroxylenol, iodoproprinyl butylcarbamate, bronopol, climbazole, and combinations thereof.

In at least one embodiment, the isothiazolinones are selected from the group consisting of methylisothiazolinone, methylchloroisothiazolinone, benzylisothiazolinone, and combinations thereof.

In at least one embodiment, the preservation booster is selected from the group consisting of ethylhexylglycerol, sorbitan caprylate, isosorbide caprylate, glyceryl caprylate, glyceryl undecylenate, caprylyl glyceryl ether, methylheptylglycerin and combinations thereof. In at least one embodiment, the preservation booster is ethylhexylglycerol.

In at least one embodiment, the anti-microbial agent is selected from preservation boosters and preservatives.

In at least one embodiment, the preservative is selected from the group consisting of aromatic alcohols, organic acids and salts thereof, hydroxypyridones, alkyl diols, halogenated compounds, isothiazolinones, and combinations thereof.

In at least one embodiment, the preservative is selected from the group consisting of hydroxy-4-methyl-6-(2,4,4-trimethylpentyl)-2(1H)-pyridone, benzoic acid, phenethyl alcohol, benzyl alcohol, phenoxyethanol, salts thereof, and combinations thereof.

In at least one embodiment, the anti-microbial concentrate comprises:

- compound X, wherein compound X is according to Formula (I):

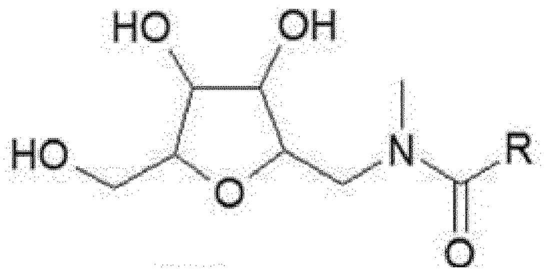

(I)

  wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids; and
- at least one preservation booster; and
- at least one preservative, wherein the preservative is preferably selected from the group consisting of aromatic alcohols, organic acids and salts thereof, hydroxypyridones, alkyl diols, halogenated compounds, isothiazolinones and mixtures thereof.

Preferably, the preservation booster is selected from the group consisting of ethylhexylglycerol, sorbitan caprylate, isosorbide caprylate, glyceryl caprylate, glyceryl undecylenate, caprylyl glyceryl ether, methylheptylglycerin and mixtures thereof.

In at least one embodiment, the anti-microbial concentrate comprises:

- compound X, wherein compound X is according to Formula (I):

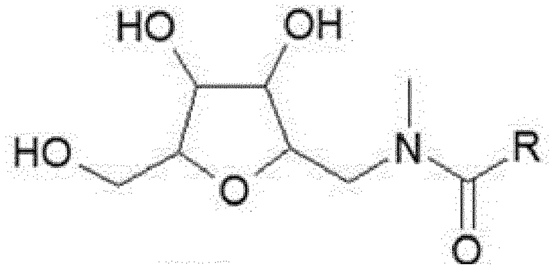

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids; and

- sorbitan monocaprylate; and
- benzyl alcohol.

In at least one embodiment, the anti-microbial concentrate comprises:

- compound X, wherein compound X is according to Formula (I):

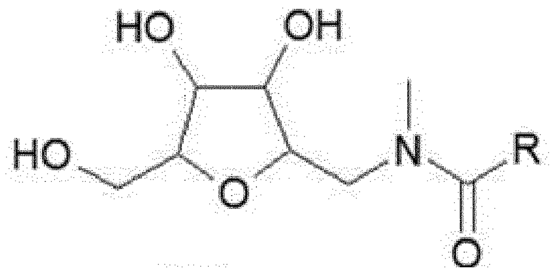

(I)

wherein R is selected from $-(CH_2)_{10}CH_3$, $-(CH_2)_{12}CH_3$, and mixtures thereof; and

- sorbitan monocaprylate; and
- benzyl alcohol.

In at least one embodiment, the anti-microbial concentrate comprises:

- compound X, wherein compound X is according to Formula (I):

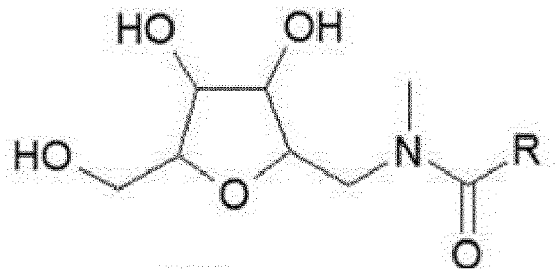

(I)

wherein R is selected from $-(CH_2)_7CH=CH_2$, $-(CH_2)_7CH=CHCH_2CH_3$, and mixtures thereof; and

- sorbitan monocaprylate; and
- benzyl alcohol.

In at least one embodiment, the anti-microbial concentrate comprises:

- compound X, wherein compound X is according to Formula (I):

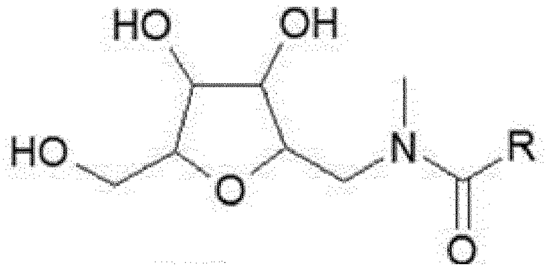

(I)

wherein the R-C=O residue in Formula (I) is derived from coconut fatty acids; and
- sorbitan monocaprylate; and
- benzyl alcohol.

In at least one embodiment, the concentrate is substantially free of a preservation booster.

In at least one embodiment, the concentrate is an aqueous solution.

In at least one embodiment, the concentrate comprises solvent. In at least one embodiment, the concentrate comprises a solvent, wherein the solvent comprises water and/or alcohol. Solvent is useful for providing the compounds used in present invention in liquid form. In at least one embodiment, the solvent is cosmetically acceptable. In at least one embodiment, the concentrate comprises at least 10 wt.-%, preferably at least 20 wt.-%, more preferably at least 30 wt.-%, even more preferably at least 50 wt.-% water. Water is useful for economic reasons but also because it is cosmetically acceptable. Optionally, the concentrate comprises water-miscible or water-soluble solvents, such as lower alkyl alcohols. In at least one embodiment, the concentrate comprises C1-C5 alkyl monohydric alcohols, preferably C2-C3 alkyl monohydric alcohols. The alcohols which may be present are in particular lower monohydric or polyhydric alcohols having 1 to 4 carbon atoms customarily used for cosmetic purposes, such as preferably ethanol and isopropanol.

Optionally, the concentrate comprises a water-soluble polyhydric alcohol. In at least one embodiment, the water-soluble polyhydric alcohols are polyhydric alcohols having two or more hydroxyl groups in the molecule. In at least one embodiment, the water-soluble polyhydric alcohol is selected from the group consisting of: dihydric alcohols such as ethylene glycol, propylene glycol, trimethylene glycol, 1,2-butylene glycol, 1,3-butylene glycol, 1,4-butylene glycol, tetramethylene glycol, 2,3-butylene glycol, pentamethylene glycol, 2-butene-1,4-diol, hexylene glycol, octylene glycol; trihydric alcohols such as glycerine, trimethylol propane, 1,2,6-hexanetriol and the like; tetrahydric alcohols such as pentaerythritol; pentahydric alcohols such as xylytol; hexahydric alcohols such as sorbitol, mannitol; polyhydric alcohol polymers such as diethylene glycol, dipropylene glycol, polyethylene glycol, polypropylene glycol, tetraethylene glycol, diglycerine, polyethylene glycol, triglycerine, tetraglycerine, polyglycerine; dihydric alcohol alkyl ethers such as ethylene glycol monomethyl ether, ethylene glycol monoethyl ether, ethylene glycol monobutyl ether, ethylene glycol monophenyl ether, ethylene glycol monohexyl ether, ethylene glycol mono-2-methylhexyl ether, ethylene glycol isoamyl ether, ethylene glycol benzyl ether, ethylene glycol isopropyl ether, ethylene glycol dimethyl ether, ethylene glycol diethyl ether, ethylene glycol dibutyl ether; dihydric alcohol alkyl ethers such as diethylene glycol monomethyl ether, diethylene glycol monoethyl ether, diethylene glycol monobutyl ether, diethylene glycol dimethyl ether, diethylene glycol diethyl ether, diethylene glycol butyl ether, diethylene glycol methyl ethyl ether, triethylene glycol monomethyl ether, triethylene glycol monoethyl ether, propylene glycol monomethyl ether, propylene glycol monoethyl ether, propylene glycol monobutyl ether, propylene glycol isopropyl ether, dipropylene glycol methyl ether, dipropylene glycol ethyl ether, dipropylene glycol butyl ether; dihydric alcohol ether esters such as ethylene glycol monomethyl ether acetate, ethylene glycol monoethyl ether acetate, ethylene glycol monobutyl ether acetate, ethylene glycol monophenyl ether acetate, ethylene glycol diadipate, ethylene glycol disuccinate, diethylene glycol monoethyl ether acetate, diethylene glycol monobutyl ether acetate, propylene glycol monomethyl ether acetate, propylene glycol monoethyl ether acetate, propylene glycol monopropyl ether acetate, propylene glycol monophenyl ether acetate; glycerine monoalkyl ethers such as xyl alcohol, selachyl alcohol, batyl alcohol; sugar alcohols such as sorbitol, maltitol, maltotriose, mannitol, sucrose, erythritol, glucose, fructose, starch sugar, maltose, xylytose, starch sugar reduced alcohol, glysolid, tetrahydrofurfuryl alcohol, POE tetrahydrofurfuryl alcohol, POP butyl ether, POP POE butyl ether, tripolyoxypropylene glycerine ether, POP glycerine ether, POP glycerine ether phosphoric acid, POP POE pentaerythritol ether, and mixtures thereof.

In a preferred embodiment, the concentrate comprises a solvent selected from the group consisting of water, glycols, ethanol, and mixtures thereof. In a preferred embodiment, the concentrate comprises water.

In a preferred embodiment, the concentrate comprises an aqueous, alcoholic or aqueous-alcoholic solvent, wherein the aqueous, alcoholic or aqueous-alcoholic solvent comprises water, ethanol, propanol, isopropanol, 1,2-propylene glycol, 1,3-propylene glycol, isobutanol, butanol, butyl glycol, butyl diglycol, glycerol, or mixtures thereof; preferably wherein the aqueous, alcoholic or aqueous-alcoholic solvent comprises water, ethanol, propanol, isopropanol, 1,2-propylene glycol, 1,3-propylene glycol, glycerol, or mixtures thereof; more preferably wherein the aqueous, alcoholic

or aqueous-alcoholic solvent comprises water, isopropanol, 1,2-propylene glycol, 1,3-propylene glycol, or mixtures thereof; even more preferably wherein the aqueous, alcoholic or aqueous-alcoholic solvent consists of water or consists of a mixture of water and an alcohol wherein the alcohol is selected from the group consisting of isopropanol, 1,2-propylene glycol and 1,3-propylene glycol.

Natural solvents can also be used. In at least one embodiment, the concentrate comprises a solvent selected from the group consisting of plant oil, honey, plant-derived sugar compositions, and mixtures thereof.

In at least one embodiment, the concentrate comprises additives common in cosmetology, pharmacy, and dermatology, which are hereinafter called auxiliaries. In at least one embodiment, the auxiliary is selected from the group consisting of oily substances, emulsifiers, coemulsifiers, cationic polymers, film formers, superfatting agents, stabilizers, active biogenic substances, glycerol, preservatives, pearlizing agents, dyes and fragrances, solvents, opacifiers, functional acids, and also protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and/or carriers/solvents. Preferably, the auxiliary is selected from the group consisting of oily substances, emulsifiers, coemulsifiers, cationic polymers, film formers, superfatting agents, stabilizers, active biogenic substances, glycerol, pearlizing agents, dyes, fragrances, opacifiers, functional acids, protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and combinations thereof.

In at least one embodiment, the concentrate comprises water soluble vitamins and their derivatives, water soluble amino acids and their salts and/or derivatives, viscosity modifiers, dyes, nonvolatile solvents or diluents (water soluble and insoluble), pearlescent aids, thickeners, foam boosters, additional surfactants or nonionic co-surfactants, pediculocides, pH adjusting agents, perfumes, preservatives, chelants, proteins, skin active agents, sunscreens, UV absorbers, vitamins, niacinamide, caffeine, minoxidil, and combinations thereof. In at least one embodiment, the concentrate comprises from 0 wt.-% to 5 wt.-% vitamins and amino acids, by total weight of the concentrate. The concentrate may also comprise pigment materials such as inorganic, nitroso, monoazo, diazo, carotenoid, triphenyl methane, triaryl methane, xanthene, quinoline, oxazine, azine, anthraquinone, indigoid, thionindigoid, quinacridone, phthalocyanine, botanical, natural colors, including: water soluble components such as those having C.I. Names. The concentrate may comprise from 0 wt.-%, preferably from 0.0001 wt.-% to 5 wt.-% pigment materials.

Example Embodiments of the Third Aspect:

In at least one embodiment, the third aspect relates to an anti-microbial concentrate consisting of:

- compound X, wherein compound X is according to Formula (I):

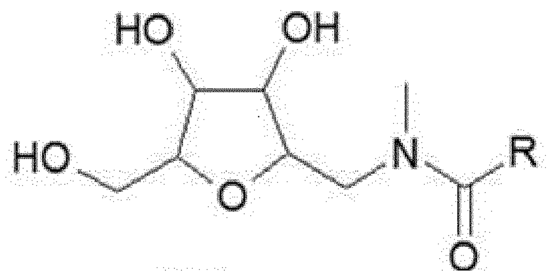

(I)

  wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids; and
- an anti-microbial agent;
- optionally a solvent;
- optionally an auxiliary, wherein the auxiliary is selected from the group consisting of oily substances, emulsifiers, coemulsifiers, cationic polymers, film formers, superfatting agents, stabilizers, active biogenic substances, glycerol, pearlizing agents, dyes, fragrances, opacifiers, functional acids, protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and combinations thereof.

In at least one embodiment, the third aspect relates to an anti-microbial concentrate consisting of:

- at least 15 wt.-% compound X, wherein compound X is according to Formula (I):

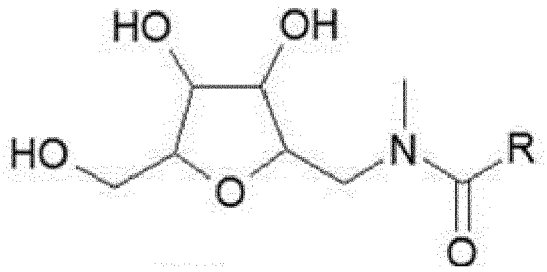

(I)

wherein R is selected from $-(CH_2)_{10}CH_3$, $-(CH_2)_{12}CH_3$, and mixtures thereof; and
- at least 10 wt.-% of an anti-microbial agent;
- optionally at least 75 wt.-% solvent;
- optionally an auxiliary, wherein the auxiliary is selected from the group consisting of oily substances, emulsifiers, coemulsifiers, cationic polymers, film formers, superfatting agents, stabilizers, active biogenic substances, glycerol, pearlizing agents, dyes, fragrances, opacifiers, functional acids, protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and combinations thereof.

In at least one embodiment, the third aspect relates to an anti-microbial concentrate consisting of:

- at least 15 wt.-% compound X, wherein compound X is according to Formula (I):

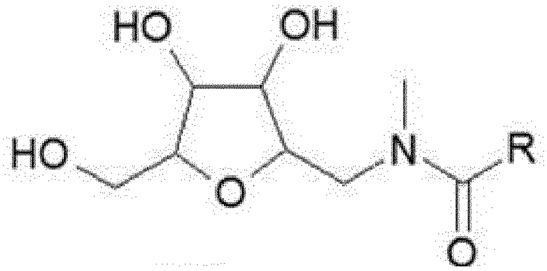

(I)

wherein R is selected from $-(CH_2)_{10}CH_3$, $-(CH_2)_{12}CH_3$, and mixtures thereof; and
- a preservative, wherein the preservative is selected from the group consisting of hydroxy-4-methyl-6-(2,4,4-trimethylpentyl)-2(1H)-pyridone, benzoic acid, phenethyl alcohol, benzyl alcohol, phenoxyethanol, salts thereof, and combinations thereof;
- optionally a solvent;
- optionally an auxiliary, wherein the auxiliary is selected from the group consisting of oily substances, emulsifiers, coemulsifiers, cationic polymers, film formers, superfatting agents, stabilizers, active biogenic substances, glycerol, pearlizing agents, dyes, fragrances, opacifiers, functional acids, protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and combinations thereof.

In at least one embodiment, the third aspect relates to an anti-microbial concentrate consisting of:

- at least 15 wt.-% compound X, wherein compound X is according to Formula (I):

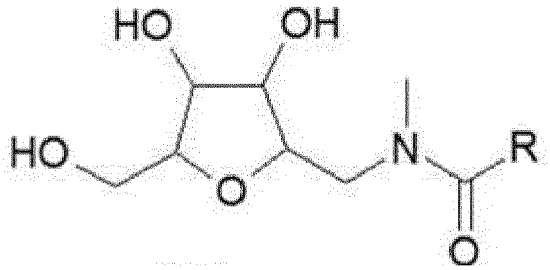

(I)

wherein R is selected from $-(CH_2)_{10}CH_3$, $-(CH_2)_{12}CH_3$, and mixtures thereof; and

- at least 10 wt.-% preservative, wherein the preservative is selected from the group consisting of hydroxy-4-methyl-6-(2,4,4-trimethylpentyl)-2(1H)- pyridone, benzoic acid, phenethyl alcohol, benzyl alcohol, phenoxyethanol, salts thereof, and combinations thereof;
- optionally a solvent;
- optionally an auxiliary, wherein the auxiliary is selected from the group consisting of oily substances, emulsifiers, coemulsifiers, cationic polymers, film formers, superfatting agents, stabilizers, active biogenic substances, glycerol, pearlizing agents, dyes, fragrances, opacifiers, functional acids, protein

derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and combinations thereof.

Fourth Aspect

A fourth aspect relates to the use of a compound X as a preservative booster, an anti-microbial agent, an emulsifier and/or a solubiliser, wherein compound X is according to Formula (I):

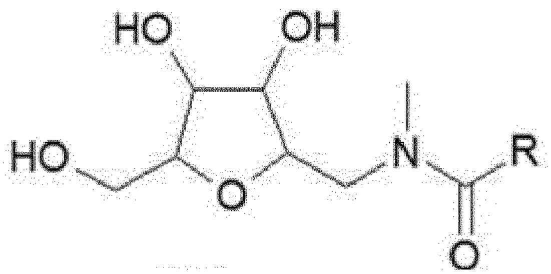

(I)

wherein R is selected from saturated hydrocarbon chains having 11 to 23 carbon atoms, unsaturated hydrocarbon chains having 11 to 23 carbon atoms, $-(CH_2)_7CH=CH_2$, and mixtures thereof; or wherein the R-C=O residue in Formula (I) is derived from coconut fatty acids.

In at least one embodiment, R in Formula (I) is selected from $-(CH_2)_{10}CH_3$, $-(CH_2)_{12}CH_3$, and mixtures thereof; or

R in Formula (I) is selected from $-(CH_2)_7CH=CH_2$, $-(CH_2)_7CH=CHCH_2CH_3$, and mixtures thereof; or
the R-C=O residue in Formula (I) is derived from coconut fatty acids.

In at least one embodiment, R in Formula (I) is selected from $-(CH_2)_{10}CH_3$, $-(CH_2)_{12}CH_3$, and mixtures thereof. In at least one embodiment, R in Formula (I) is selected from $-(CH_2)_7CH=CH_2$, $-(CH_2)_7CH=CHCH_2CH_3$, and mixtures thereof. In at least one embodiment, the R-C=O residue in Formula (I) is derived from coconut fatty acids. In at least one embodiment, the R-C=O residue in Formula (I) is derived from soybean fatty acids.

At least one embodiment relates to the use of a compound X as a preservative booster or an anti-microbial agent, wherein compound X is according to Formula (I):

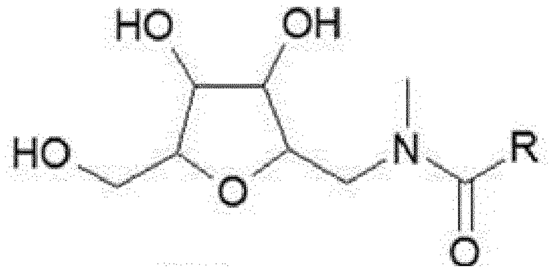

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

In at least one embodiment, the anti-microbial agent is an antifungal agent.

At least one embodiment relates to the use of a compound X as an antifungal agent, wherein compound X is according to Formula (I):

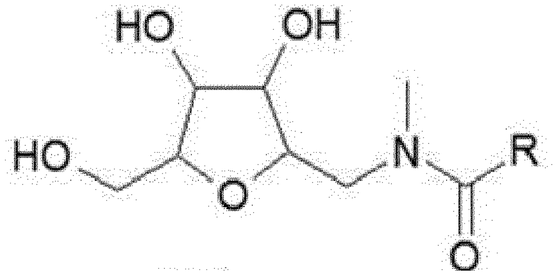

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

At least one embodiment relates to the use of a compound X as an emulsifier or a solubiliser, wherein compound X is according to Formula (I):

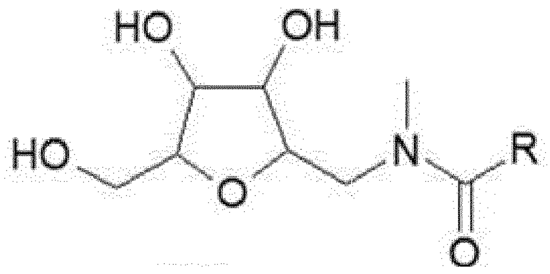

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

Fifth Aspect

A fifth aspect relates to a method of reducing the effects of microorganisms in a formulation, wherein the method comprises adding a composition according to the first aspect or a concentrate according to the third aspect or compound X according to the seventh aspect to the formulation. In at least one embodiment, the formulation is according to the sixth aspect.

In at least one embodiment, the level of the composition or the concentrate or compound X added to the formulation is from 0.001 wt.-% to 20 wt.-%, preferably 0.01 wt.-% to 10 wt.-%, more preferably 0.1 wt.-% to 5 wt.-%, by total weight of the formulation.

Sixth Aspect

A sixth aspect relates to a formulation comprising a compound X according to Formula (I)

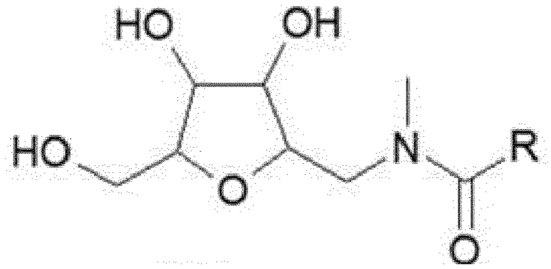

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids. In at least one embodiment, the formulation comprises from 0.001 wt.-% to 20 wt.-%, preferably from 0.01 wt.-% to 10 wt.-%, more preferably from 0.1 wt.-% to 5 wt.-% compound X, by total weight of the formulation.

In at least one embodiment, R in Formula (I) is selected from $-(CH_2)_{10}CH_3$, - $(CH_2)_{12}CH_3$, and mixtures thereof; or

R in Formula (I) is selected from $-(CH_2)_7CH=CH_2$, $-(CH_2)_7CH=CHCH_2CH_3$, and mixtures thereof; or
the R-C=O residue in Formula (I) is derived from coconut fatty acids.

In at least one embodiment, R in Formula (I) is selected from $-(CH_2)_{10}CH_3$, - $(CH_2)_{12}CH_3$, and mixtures thereof. In at least one embodiment, R in Formula (I) is selected from $-(CH_2)_7CH=CH_2$, $-(CH_2)_7CH=CHCH_2CH_3$, and mixtures thereof. In at least one embodiment, the R-C=O residue in Formula (I) is derived from coconut fatty acids. In at least one embodiment, the R-C=O residue in Formula (I) is derived from soybean fatty acids.

In at least one embodiment, the formulation comprises the composition according to the first aspect or the concentrate according to the third aspect.

In at least one embodiment, the formulation is selected from the group consisting of cosmetic formulations and household cleaning formulations.

In at least one embodiment, the formulation is selected from the group consisting of shampoo, body wash, facial cleanser, face mask, bubble bath, intimate wash, bath oil, cleansing milk, micellar water, make-up remover, cleansing wipes, hair mask, perfume, liquid soap, shaving soap, shaving foam, cleansing foam, day cream, anti-ageing cream, body milk, body lotion, body mousse, face serum, eye cream, sunscreen lotion, sun cream, face cream, after-shave lotion, pre-shaving cream, depilatory cream, skin-whitening gel, self-tanning cream, anti-acne gel, mascara, foundation, primer, concealer, blush, bronzer, blemish balm (bb) cream, eyeliner, night cream, eye brow gel, highlighter, lip stain, hand sanitizer, hair oil, nail varnish remover, conditioner, hair styling gel, hair styling cream, anti-frizz serum, scalp treatment, hair colorant, split end fluid, deodorant, antiperspirant, baby cream, insect repellent, hand cream, sunscreen gel, foot cream, exfoliator, body scrub, cellulite treatment, bar soap, cuticle cream, lip balm, hair treatment, eye shadow, bath additive, body mist, eau de toilette, mouthwash, toothpaste, lubricating gel, moisturizer, serum, toner, aqua sorbet, cream gel, styling mousse, dry shampoo, lip stick, lip gloss, hydro-alcoholic gel, body oil, shower milk, illuminator, lip crayon, hair spray, combing cream, and sunblock.

In at least one embodiment, the formulation is a formulation selected from the group consisting of shampoo, body wash, facial cleanser, cleansing mask, bubble bath, bath oil, cleansing milk, micellar water, make-up remover, cleansing wipes, perfume, soaps, shaving soaps, shaving foams and cleansing foams.

In at least one embodiment, the formulation is a cosmetic formulation for cleansing hair and/or skin.

In at least one embodiment, the formulation is an aqueous solution.

In at least one embodiment, the formulation comprises solvent. In at least one embodiment, the formulation comprises a solvent, wherein the solvent comprises water and/or alcohol. Solvent is useful for providing the compounds used in present invention in liquid form. In at least one embodiment, the solvent is cosmetically acceptable. In at least one embodiment, the formulation comprises at least 10 wt.-%, preferably at least 20 wt.-%, more preferably at least 30 wt.-%, even more preferably at least 50 wt.-% water. Water is useful for economic reasons but also because it is cosmetically acceptable. Optionally, the formulation comprises water-miscible or water-soluble solvents, such as lower alkyl alcohols. In at least one embodiment, the formulation comprises C1-C5 alkyl monohydric alcohols, preferably C2-C3 alkyl monohydric alcohols. The alcohols which may be present are in particular lower monohydric or polyhydric alcohols having 1 to 4 carbon atoms customarily used for cosmetic purposes, such as preferably ethanol and isopropanol.

Optionally, the formulation comprises a water-soluble polyhydric alcohol. In at least one embodiment, the water-soluble polyhydric alcohols are polyhydric alcohols having two or more hydroxyl groups in the molecule. In at least one embodiment, the water-soluble polyhydric alcohol is selected from the group consisting of: dihydric alcohols such as ethylene glycol, propylene glycol, trimethylene glycol, 1,2-butylene glycol, 1,3-butylene glycol, 1,4-butylene glycol, tetramethylene glycol, 2,3-butylene glycol, pentamethylene glycol, 2-butene-1,4-diol, hexylene glycol, octylene glycol; trihydric alcohols such as glycerine, trimethylol propane, 1,2,6-hexanetriol and the like; tetrahydric alcohols such as pentaerythritol; pentahydric alcohols such as xylytol; hexahydric alcohols such as sorbitol, mannitol; polyhydric alcohol polymers such as diethylene glycol, dipropylene glycol, polyethylene glycol, polypropylene glycol, tetraethylene glycol, diglycerine, polyethylene glycol, triglycerine, tetraglycerine, polyglycerine; dihydric alcohol alkyl ethers such as ethylene glycol monomethyl ether, ethylene glycol monoethyl ether, ethylene glycol monobutyl ether, ethylene glycol monophenyl ether, ethylene glycol monohexyl ether, ethylene glycol mono-2-methylhexyl ether, ethylene glycol isoamyl ether, ethylene glycol benzyl ether, ethylene glycol isopropyl ether, ethylene glycol dimethyl ether, ethylene glycol diethyl ether, ethylene glycol dibutyl ether; dihydric alcohol alkyl ethers such as diethylene glycol monomethyl ether, diethylene glycol monoethyl ether, diethylene glycol monobutyl ether, diethylene glycol dimethyl ether, diethylene glycol diethyl ether, diethylene glycol butyl ether, diethylene glycol methyl ethyl ether, triethylene glycol monomethyl ether, triethylene glycol monoethyl ether, propylene glycol monomethyl ether, propylene glycol monoethyl ether, propylene glycol monobutyl ether, propylene glycol isopropyl ether, dipropylene glycol methyl ether, dipropylene glycol ethyl ether, dipropylene glycol butyl ether; dihydric alcohol ether esters such as ethylene glycol monomethyl ether acetate, ethylene glycol monoethyl ether acetate, ethylene glycol monobutyl ether acetate, ethylene glycol monophenyl ether acetate, ethylene glycol diadipate, ethylene glycol disuccinate, diethylene glycol monoethyl ether acetate, diethylene glycol monobutyl ether acetate, propylene glycol monomethyl ether acetate, propylene glycol monoethyl ether acetate, propylene glycol monopropyl ether acetate, propylene glycol monophenyl ether acetate; glycerine monoalkyl ethers such as xyl alcohol, selachyl alcohol, batyl alcohol; sugar alcohols such as sorbitol, maltitol, maltotriose, mannitol, sucrose, erythritol, glucose, fructose, starch sugar, maltose, xylytose, starch sugar reduced alcohol, glysolid, tetrahydrofurfuryl alcohol, POE tetrahydrofurfuryl alcohol, POP butyl ether, POP POE butyl ether, tripolyoxypropylene glycerine ether, POP glycerine ether, POP glycerine ether phosphoric acid, POP POE pentaerythritol ether, and mixtures thereof.

In a preferred embodiment, the formulation comprises a solvent selected from the group consisting of water, glycols, ethanol, and mixtures thereof. In a preferred embodiment, the formulation comprises water.

In a preferred embodiment, the formulation comprises an aqueous, alcoholic or aqueous-alcoholic solvent, wherein the aqueous, alcoholic or aqueous-alcoholic solvent comprises water, ethanol, propanol, isopropanol, 1,2-propylene glycol, 1,3-propylene glycol, isobutanol, butanol, butyl glycol, butyl diglycol, glycerol, or mixtures thereof; preferably wherein the aqueous, alcoholic or aqueous-alcoholic solvent comprises water, ethanol, propanol, isopropanol, 1,2-propylene glycol, 1,3-propylene glycol, glycerol, or mixtures thereof; more preferably wherein the aqueous, alcoholic or aqueous-alcoholic solvent comprises water, isopropanol, 1,2-propylene glycol, 1,3-propylene glycol, or mixtures thereof; even more preferably wherein the aqueous, alcoholic or aqueous-alcoholic solvent consists of water or consists of a mixture of water and an alcohol wherein the alcohol is selected from the group consisting of isopropanol, 1,2-propylene glycol and 1,3-propylene glycol.

Natural solvents can also be used. In at least one embodiment, the formulation comprises a solvent selected from the group consisting of plant oil, honey, plant-derived sugar compositions, and mixtures thereof.

In at least one embodiment, the formulation comprises additives common in cosmetology, pharmacy, and dermatology, which are hereinafter called auxiliaries. In at least one embodiment, the auxiliary is selected from the group consisting of oily substances, emulsifiers, coemulsifiers, cationic polymers, film formers, superfatting agents, stabilizers, active biogenic substances, glycerol, preservatives, pearlizing agents, dyes and fragrances, solvents, opacifiers, functional acids, and also protein derivatives such as gelatin, collagen hydrolysates, natural or synthetic-based polypeptides, egg yolk lecithin, lanolin and lanolin derivatives, fatty alcohols, silicones, deodorants, substances with a keratolytic and keratoplastic action, enzymes, and/or carriers/solvents.

In at least one embodiment, the formulation comprises water soluble vitamins and their derivatives, water soluble amino acids and their salts and/or derivatives, viscosity modifiers, dyes, nonvolatile solvents or diluents (water soluble and insoluble), pearlescent aids, thickeners, foam boosters, additional surfactants or nonionic co-surfactants, pediculocides, pH adjusting agents, perfumes, preservatives, chelants, proteins, skin active agents, sunscreens, UV absorbers, vitamins, niacinamide, caffeine, minoxidil, and combinations thereof. In at least one embodiment, the formulation comprises from 0 wt.-% to 5 wt.-% vitamins and amino acids, by total weight of the formulation. The formulation may also comprise pigment materials such as inorganic, nitroso, monoazo, diazo, carotenoid, triphenyl methane, triaryl methane, xanthene, quinoline, oxazine, azine, anthraquinone, indigoid, thionindigoid, quinacridone, phthalocyanine, botanical, natural colors, including: water soluble components such as those having C.I. Names. The formulation may comprise from 0 wt.-%, preferably from 0.0001 wt.-% to 5 wt.-% pigment materials.

In at least one embodiment, the formulation comprises an oily substance, which is any fatty substance which is liquid at room temperature (25°C). In at least one embodiment, the formulation comprises oily substance selected

from the group consisting of silicone oils, volatile or nonvolatile, linear, branched or cyclic, optionally with organic modification; phenylsilicones; silicone resins and silicone gums; mineral oils such as paraffin oil or vaseline oil; oils of animal origin such as perhydrosqualene, lanolin; oils of plant origin such as liquid triglycerides, e.g., sunflower oil, corn oil, soybean oil, rice oil, jojoba oil, babusscu oil, pumpkin oil, grapeseed oil, sesame oil, walnut oil, apricot oil, macadamia oil, avocado oil, sweet almond oil, lady's-smock oil, castor oil, triglycerides of caprylic/capric acids, olive oil, peanut oil, rapeseed oil, argan oil, abyssinian oil, and coconut oil; synthetic oils such as purcellin oil, isoparaffins, linear and/or branched fatty alcohols and fatty acid esters, preferably guerbet alcohols having 6 to 18, preferably 8 to 10, carbon atoms; esters of linear ($C_6$-$C_{13}$) fatty acids with linear ($C_6$-$C_{20}$) fatty alcohols; esters of branched ($C_6$-$C_{13}$) carboxylic acids with linear ($C_6$-$C_{20}$) fatty alcohols, esters of linear ($C_6$-$C_{18}$) fatty acids with branched alcohols, especially 2-ethylhexanol; esters of linear and/or branched fatty acids with polyhydric alcohols (such as dimerdiol or trimerdiol, for example) and/or guerbet alcohols; triglycerides based on ($C_6$-$C_{10}$) fatty acids; esters such as dioctyl adipate, diisopropyl dimer dilinoleate; propylene glycols/dicaprylate or waxes such as beeswax, paraffin wax or microwaxes, alone or in combination with hydrophilic waxes, such as cetylstearyl alcohol, for example; fluorinated and perfluorinated oils; fluorinated silicone oils; mixtures of the aforementioned compounds.

In at least one embodiment, the formulation comprises a non-ionic coemulsifier. In at least one embodiment, the non-ionic coemulsifier is selected from adducts of from 0 to 30 mol of ethylene oxide and/or from 0 to 5 mol of propylene oxide with linear fatty alcohols having 8 to 22 carbon atoms, with fatty acids having 12 to 22 carbon atoms, with alkylphenols having 8 to 15 carbon atoms in the alkyl group, and with sorbitan or sorbitol esters; ($C_{12}$-$C_{18}$) fatty acid monoesters and diesters of adducts of from 0 to 30 mol of ethylene oxide with glycerol; glycerol monoesters and diesters and sorbitan monoesters and diesters of saturated and unsaturated fatty acids having 6 to 22 carbon atoms and, where appropriate, their ethylene oxide adducts; adducts of from 15 to 60 mol of ethylene oxide with castor oil and/or hydrogenated castor oil; polyol esters and especially polyglycerol esters, such as polyglyceryl polyricinoleate and polyglyceryl poly-12-hydroxystearate, for example. Likewise suitable are mixtures of compounds from one or more of these classes of substance. Examples of suitable ionogenic coemulsifiers include anionic emulsifiers, such as mono-, di- or tri-phosphoric esters, but also cationic emulsifiers such as mono-, di-, or tri-alkyl quats and their polymeric derivatives.

In at least one embodiment, the formulation comprises a cationic polymer. Suitable cationic polymers include those known under the INCI designation "Polyquaternium", especially Polyquaternium-31, Polyquaternium-16, Polyquaternium-24, Polyquaternium-7, Polyquaternium-22, Polyquaternium-39, Polyquaternium-28, Polyquaternium-2, Polyquaternium-10, Polyquaternium-11, and also Polyquaternium 37 & mineral oil & PPG trideceth (Salcare SC95), PVP-dimethylaminoethyl methacrylate copolymer, guar-hydroxypropyltriammonium chlorides, and also calcium alginate and ammonium alginate. It is additionally possible to employ cationic cellulose derivatives; cationic starch; copolymers of diallylammonium salts and acrylamides; quaternized vinylpyrrolidone/vinylimidazole polymers; condensation products of polyglycols and amines; quaternized collagen polypeptides; quaternized wheat polypeptides; polyethyleneimines; cationic silicone polymers, such as amidomethicones, for example; copolymers of adipic acid and dimethylaminohydroxypropyldiethylenetriamine; polyaminopolyamide and cationic chitin derivatives, such as chitosan, for example.

In at least one embodiment, the formulation comprises a superfatting agent. As superfatting agents it is possible to use substances such as, for example, polyethoxylated lanolin derivatives, lecithin derivatives, polyol fatty acid esters, monoglycerides, or fatty acid alkanol amides, the latter serving simultaneously as foam stabilizers. Moisturizers available include for example isopropyl palmitate, glycerol and/or sorbitol.

In at least one embodiment, the formulation comprises a stabilizer. As stabilizer it is possible to use metal salts of fatty acids, such as magnesium, aluminum and/or zinc stearate, for example.

In at least one embodiment, the formulation comprises a care additive. The formulations can be blended with conventional ceramides, pseudoceramides, fatty acid N-alkylpolyhydroxyalkyl amides, cholesterol, cholesterol fatty acid esters, fatty acids, triglycerides, cerebrosides, phospholipids, panthenol and similar substances as a care additive.

In at least one embodiment, the formulation comprises an anti-fungal substance. In at least one embodiment, the anti-fungal substance is selected from the group consisting of ketoconazole, oxiconazole, bifonazole, butoconazole, cloconazole, clotrimazole, econazole, enilconazole, fenticonazole, isoconazole, miconazole, sulconazole, tioconazole, fluconazole, itraconazole, terconazole, naftifine and terbinafine, zinc pyrithione, piroctone olamine (octopirox), and combinations thereof. In at least one embodiment, the formulation comprises a total amount of anti-fungal substance in the formulation of from 0.1 wt.-% to 1 wt.-%. In at least one embodiment, the formulation comprises pyridinethione antidandruff particulates. For example, 1-hydroxy-2-pyridinethione salts are highly preferred particulate anti-dandruff agents. The concentration of pyridinethione antidandruff particulate may range from 0.1 wt.-% to 4 wt.-%, by total weight of the formulation, preferably from 0.1 wt.-% to 3 wt.-%, more preferably from 0.3 wt.-% to 2 wt.-%. Preferred pyridinethione salts include those formed from heavy metals such as zinc, tin, cadmium, magnesium, aluminum or zirconium, preferably zinc, more preferably the zinc salt of 1-hydroxy-2-pyridinethione (known as "zinc pyridinethione" or "ZPT"), more preferably 1-hydroxy-2-pyridinethione salts in platelet particle form. Salts formed from other cations, such as sodium, may also be suitable.

Functional acids are acidic substances used to impart a clinical functionality to the skin or hair upon application.

Suitable functional acids include alpha-hydroxy acids, beta-hydroxy acids, lactic acid, retinoic acid, and similar substances.

In at least one embodiment, the formulation comprises an astringent. In at least one embodiment, the astringent is selected from the group consisting of magnesium oxide, aluminum oxide, titanium dioxide, zirconium dioxide, zinc oxide, oxide hydrates, aluminum oxide hydrate (boehmite) and hydroxide, chlorohydrates of calcium, magnesium, aluminum, titanium, zirconium or zinc. In at least one embodiment, the formulation comprises from 0.001 wt.-% to 10 wt.-%, or from 0.01 wt.-% to 9 wt.-%, or from 0.05 wt.-% to 8 wt.-%, or from 0.1 wt.-% to 5 wt.-% astringent.

In at least one embodiment, the formulation comprises a deodorizing agent. In at least one embodiment, the deodorizing agent is selected from the group consisting of allantoin, bisabolol, and combinations thereof. In at least one embodiment, the formulation comprises from 0.001 wt.-% to 10 wt.-%, or from 0.01 wt.-% to 9 wt.-%, or from 0.05 wt.-% to 8 wt.-%, or from 0.1 wt.-% to 5 wt.-% deodorizing agent.

In at least one embodiment, the formulation comprises a sun protection agent and/or UV filter. Suitable sun protection agents and UV filters are disclosed in WO-2013/017262A1, from page 32, line 11 to the end of page 33. In at least one embodiment, the sun protection agent and/or UV filter is selected from the group consisting of 4-amino benzoic acid, 3-(4'-trimethylammonium)-benzylide-boran-2-one-methylsulfate, camphor benzalkonium methosulfate, 3,3,5-trimethyl-cyclohexylsalicylate, 2-hydroxy-4-methoxybenzophenone, 2-phenylbenzimidazole-5-sulfonic acid and potassium-, sodium- und triethanolamine salts thereof, 3,3'-(1,4-phenylene dimethine)-bis-(7,7-dimethyl-2-oxobicyclo[2.2.1]-heptane-1-methane sulfonic acid) and its salts, 1-(4-tert.-butylphenyl)-3-(4-methoxyphenyl)propan-1,3-dion, 3-(4'-sulfo)-benzylidene-bornane-2-one its salts, 2-cyan-3,3-diphenylacrylic acid-(2-ethylhexylester), polymers of N-[2(and 4)-(2-oxoborn-3-ylidenmethyl)benzyl]-acrylamide, 4-methoxy-cinnamic acid-2-ethyl-hexylester, ethoxylated ethyl-4-amino-benzoate, 4-methoxy-cinnamic acid-isoamylester, 2,4,6-tris-[p-(2-ethylhexyloxycarbonyl)anilino]-1,3,5-triazine, 2-(2H-benzotriazole-2-yl)-4-methyl-6-(2-methyl-3-(1,3,3,3-tetramethyl-1-(trimethylsilyloxy)-disiloxanyl)-propyl)phenol, 4,4'-[(6-[4-((1,1-dimethylethyl)-amino-carbonyl)phenylamino]-1,3,5-triazin-2,4-yl)diimino]bis-(benzoic acid-2-ethylhexylester), 3-benzophenone, 4-benzophenone, 3(4'-methylbenzyliden)-D,L-camphor, 3-benzylidene-camphor, salicylic acid-2-ethylhexylester, 4-dimethyl aminobenzic acid-2-ethylhexylester, hydroxy-4-methoxybenzophenone-5 sulfonic acid and the sodium salt thereof, 4-isopropyl benzylsalicylate, N,N,N-trimethyl-4-(2-oxoborn-3-ylidenemethyl) anilium methyl sulfate, homosalate (INN), oxybenzone (INN), 2-phenylbenzimidazole-5-sulfonic acid and its sodium, potassium, and triethanolamine salts, octylmethoxy cinnamic acid, isopentyl-4-methoxy cinnamic acid, isoamyl-p-methoxy cinnamic acid, 2,4,6-trianilino-(p-carbo-2'-ethylhexyl-1'-oxy)-1,3,5-triazine (octyl triazone) phenol, 2,2(2H-benzotriazol-2-yl)-4-methyl-6-(2-methyl-3-(1,3,3,3-tetramethyl-1-(trimethylsilyl)oxy)-disiloxanyl)propyl (drometrizole trisiloxane) benzic acid, 4,4-((6-(((1,1-dimethylethyl)amino)carbonyl)phenyl)amino)-1,3,5-triazine-2,4-diyl)diimino)bis,bis(2-ethylhexyl)ester) benzoic acid, 4,4-((6-(((1,1-dimethylethyl)amino)-carbonyl)phenyl)amino)-1,3,5-triazine-2,4-diyl)diimino)bis,bis(2-ethylhexyl)ester), 3-(4'-methylbenzylidene)-D,L-camphor (4-methylbenzylidene camphor), benzylidene-camphor-sulfonic acid, octocrylene, polyacrylamidomethyl-benzylidene-camphor, 2-ethylhexyl salicylate (octyl salicylate), 4-dimethyl-aminobenzoeacidethyl-2-hexylester (octyl dimethyl PABA), PEG-25 PABA, 2 hydroxy-4-methoxybenzo-phenone-5-sulfonic acid (5-benzophenone) and the sodium salt thereof, 2,2'-methylene-bis-6-(2H-benzotriazol-2-yl)-4-(tetramethyl-butyl)-1,1,3,3-phenol, the sodium salt of 2-2'-bis-(1,4-phenylene)1H-benzimidazole-4,6-disulfonic acid, (1,3,5)-triazine-2,4-bis((4-(2-ethyl-hexyloxy)-2-hydroxy)-phenyl)-6-(4-methoxyphenyl), 2-ethylhexyl-2-cyano-3,3-diphenyl-2-propenoate, glyceryl octanoate, di-p-methoxy cinnamic acid, p-aminobenzoic acid and its ester, 4-tert-butyl-4'-methoxydibenzoylmethane, 4-(2-β-glucopyranoxy)propoxy-2-hydroxybenzophenone, octyl salicylate, methyl-2,5-diisopropyl cinnamic acid, cinoxate, dihydroxy-dimethoxybenzophenone, disodium salts of 2,2'-dihydroxy-4,4'-dimethoxy-5,5'-disulfobenzophenone, dihydroxybenzophenone, 1,3,4-dimethoxyphenyl-4,4-dimethyl-1,3-pentanedione, 2-ethylhexyl-dimethoxybenzyliden-dioxoimidazolidinpropionate, methylene-bis-benztriazolyl tetramethylbutylphenol, phenyldibenzimidazoltetrasulfonate, bis-ethylhexyloxyphenol-methoxyphenol-triazine, tetrahydroxybenzophenone, terephthalylidendicamphor-sulfonic acid, 2,4,6-tris[4,2-ethylhexyloxycarbonyl)anilino]-1,3,5-triazine, methyl-bis(trimethylsiloxy)silyl-isopentyl trimethoxy cinnamic acid, amyl-p-dimethylaminobenzoate, amyl-p-dimethylamino benzoate, 2-ethylhexyl-p-dimethylaminobenzoate, isopropyl-p-methoxy cinnamic acid/diisopropyl cinnamic acid ester, 2-ethylhexyl-p-methoxy cinnamic acid, 2-hydroxy-4-methoxy benzophenone, 2-hydroxy-4-methoxybenzophenone-5-sulfonic acid and the trihydrate, 2-hydroxy-4-methoxybenzophenone-5-sulfonate sodium salt, phenyl-benzimidazole sulfonic acid, and combinations thereof. In at least one embodiment, the formulation comprises from 0.001 wt.-% to 10 wt.-%, preferably from 0.05 wt.-% to 5 wt.-%, even more preferably from 0.1 wt.-% to 3 wt.-%, most preferably from 0.05 wt.-% to 1 wt.-% sun protection agent and/or UV filter. In at least one embodiment, the formulation comprises a photoprotective substance in an amount of from 0.01 to 10 wt.-%, or from 0.1 to 5 wt.-%, more preferably from 0.2 to 2 wt.-%. Suitable photoprotective substances include, in particular, all of the photoprotective substances specified in EP1084696A1, which is incorporated herein by reference. In a preferred embodiment, the photoprotective substance is selected from the group consisting of 2-ethylhexyl 4-methoxycinnamate, methyl methoxycinnamate, 2-hydroxy-4-methoxybenzophenone-5-sulfonic acid, polyethoxylated p-aminobenzoates, and combinations thereof.

In at least one embodiment, the formulation comprises an anti-oxidant. In at least one embodiment, the anti-oxidant is selected from the group consisting of amino acids, peptides, sugars, imidazoles, carotinoids, carotenes, chlorogenic acid, lipoic acid, thiols, thiol glycosyl esters, thiol N-acetyl esters, thiol methyl esters, thiol ethyl esters, thiol propyl esters, thiol amyl esters, thiol butyl esters, thiol lauryl esters, thiol palmitoyl esters, thiol oleyl esters, thiol linoleyl esters, thiol cholesteryl esters, thiol glyceryl esters, dilaurylthiodipropionate, distearylthiodipropionate, thiodipropionic acid, metal chelators, hydroxy acids, fatty acids, folic acids, vitamin C, tocopherol, vitamin A, stilbenes, derivatives and combinations thereof. In at least one embodiment, the anti-oxidant is selected from the group consisting of glycine, histidine, tyrosine, tryptophan, urocaninic acid, D,L-carnosine, D-carnosine, L-carnosine, beta-carotene, alpha-carotene, lycopene, dihydrolipoic acid, aurothioglucose, propylthiouracil, thioredoxine, glutathione, cysteine, cystine, cystamine, buthioninsulfoximine, homocysteinsulfoximine, buthioninsulfone, penta-, hexa-, heptathioninsulfoximine, hydroxyfatty acids, palmitic acid, phytinic acid, lactoferrin, citric acid, lactic acid, malic acid, humic acid, bile acid, bilirubin, biliverdin, EDTA, EGTA, linoleic acid, linolenic acid, oleic acid, butylhydroxyanisol, trihydroxybutyrophenone, ubichinon, ubichinol, ascorbylpalmitate, Mg-ascorbylphosphate, ascorbylacetate, vitamin E acetate, vitamin A palmitate, carnosine, mannose, ZnO, $ZnSO_4$, selenium methionine, stilbenes, superoxide dismutase, and combinations thereof. In at least one embodiment, the antioxidant is selected from the group consisting of vitamin A, vitamin A derivatives, vitamin E, vitamin E derivatives, and combinations thereof. In at least one embodiment, the formulation comprises from 0.001 wt.-% to 10 wt.-%, preferably from 0.05 wt.-% to 5 wt.-%, particularly preferably from 0.1 wt.-% to 3 wt.-%, also particularly preferably from 0.05 wt.-% to 1 wt.-% antioxidant.

In at least one embodiment, the formulation comprises a dye or pigment. In at least one embodiment, the formulation comprises at least one pigment. Suitable dyes and pigments are disclosed in WO2013/017262A1 in the table spanning pages 36 to 43. These may be colored pigments which impart color effects to the product mass or to hair, or they may be luster effect pigments which impart luster effects to the product mass or to hair. The color or luster effects on hair are preferably temporary, i.e. they last until the next hair wash and can be removed again by washing the hair with customary shampoos. In at least one embodiment, the formulation comprises a total amount of from 0.01 wt.-% to 25 wt.-%, preferably from 5 wt.-% to 15 wt.-% pigment. In at least one embodiment, the particle size of the pigment is from 1 micron to 200 micron, preferably from 3 micron to 150 micron, more preferably from 10 micron to 100 micron. The pigments are colorants which are virtually insoluble in the application medium, and may be inorganic or organic. Inorganic-organic mixed pigments are also possible. Preference is given to inorganic pigments. The advantage of inorganic pigments is their excellent resistance to light, weather and temperature. The inorganic pigments may be of natural origin. In at least one embodiment, the inorganic pigment is selected from the group consisting of chalk, ochre, umber, green earth, burnt sienna, graphite, and combinations thereof. The pigments may be white pigments, such as, for example, titanium dioxide or zinc oxide, black pigments, such as, for example, iron oxide black, colored pigments, such as, for example, ultramarine or iron oxide red, luster pigments, metal effect pigments, pearlescent pigments, and fluorescent or phosphorescent pigments, where preferably at least one pigment is a colored, nonwhite pigment. In at least one embodiment, the pigment is selected from the group consisting of metal oxides, hydroxides and oxide hydrates, mixed phase pigments, sulfur-containing silicates, metal sulfides, complex metal cyanides, metal sulfates, chromates and molybdates, and the metals themselves (bronze pigments), and combinations thereof. In at least one embodiment, the pigment is selected from the group consisting of titanium dioxide (CI 77891), black iron oxide (CI 77499), yellow iron oxide (CI 77492), red and brown iron oxide (CI 77491), manganese violet (CI 77742), ultramarine (sodium aluminum sulfosilicates, CI 77007, Pigment Blue 29), chromium oxide hydrate (CI 77289), Prussian blue (ferric ferrocyanide, CI 77510), carmine (cochineal), and combinations thereof. In at least one embodiment, the pigment is selected from the group consisting of pearlescent and colored pigments based on mica which are coated with a metal oxide or a metal oxychloride, such as titanium dioxide or bismuth oxychloride, and optionally further color-imparting substances, such as iron oxides, Prussian blue, ultramarine, carmine etc. and where the color can be determined by varying the layer thickness. Such pigments are sold, for example, under the trade names Rona®, Colorona®, Dichrona® and Timiron® by Merck. In at least one embodiment, the pigment is selected from the group consisting of organic pigments such as sepia, gamboge, bone charcoal, Cassel brown, indigo, chlorophyll and other plant pigments. In at least one embodiment, the pigment is selected from the group consisting of synthetic organic pigments such as azo pigments, anthraquinoids, indigoids, dioxazine, quinacridone, phthalocyanine, isoindolinone, perylene and perinone, metal complex, alkali blue and diketopyrrolopyrrole pigments.

In at least one embodiment, the formulation comprises from 0.01 wt.-% to 10 wt.-%, preferably from 0.05 wt.-% to 5 wt.-%, of at least one particulate substance. Suitable substances are, for example, substances which are solid at room temperature (25°C) and are in the form of particles. In at least one embodiment, the particulate substance is selected from the group consisting of silica, silicates, aluminates, clay earths, mica, insoluble salts, in particular insoluble inorganic metal salts, metal oxides, e.g. titanium dioxide, minerals and insoluble polymer particles are suitable. The particles may be present in the formulation in undissolved, preferably stably dispersed form, and, following application to the keratin substrate and evaporation of the solvent, can deposit on the substrate in solid form. A stable dispersion can be achieved by providing the formulation with a yield point which is large enough to prevent the solid particles from sinking. An adequate yield point can be established using suitable gel formers in a suitable amount. In at least one

embodiment, the particulate substance is selected from the group consisting of silica (silica gel, silicon dioxide) and metal salts, in particular inorganic metal salts, where silica is particularly preferred. Metal salts are, for example, alkali metal or alkaline earth metal halides, such as sodium chloride or potassium chloride; alkali metal or alkaline earth metal sulfates, such as sodium sulfate or magnesium sulfate.

In at least one embodiment, the formulation comprises a direct dye. Preferred among the direct dyes are the following compounds, alone or in combination with one another: Hydroxyethyl-2-nitro-p-toluidine, 2-hydroxyethylpicramic acid, 4-nitrophenylaminourea, tri(4-amino-3-methylphenyl)carbenium chloride (Basic Violet 2), 1,4-di-amino-9,10-anthracenedione (Disperse Violet 1), 1-(2-hydroxyethyl)amino-2-nitro-4-[di(2-hydroxyethyl)amino]benzene (HC Blue No. 2), 4-[ethyl-(2-hydroxyethyl)amino]-1-[(2-hydroxyethyl)amino]-2-nitrobenzene hydrochloride (HC Blue No. 12), 1-amino-4-[di(2-hydroxyethyl)amino]-2-nitrobenzene hydrochloride (HC Red No. 13), 4-amino-1-[(2-hydroxyethyl)amino]-2-nitrobenzene (HC Red No. 3), 4-amino-3-nitrophenol, 4-[(2-hydroxyethyl)amino]-3-nitrophenol, 1-amino-5-chloro-4-[(2,3-dihydroxypropyl)amino]-2-nitrobenzene (HC Red No. 10), 5-chloro-1,4-[di(2,3-dihydroxypropyl)amino]-2-nitrobenzene (HC Red No. 11), 2-chloro-6-ethylamino-4-nitrophenol, 2-amino-6-chloro-4-nitrophenol, 4-[(2-hydroxyethyl)amino]-3-nitro-1-trifluoromethylbenzene (HC Yellow No. 13), 8-amino-2-bromo-5-hydroxy-4-imino-6-{[3-(trimethylammonio)-phenyl]amino}-1(4H)-naphthalenone chloride (C.I. 56059; Basic Blue No. 99), 1-[(4-aminophenyl)azo]-7-(trimethylammonio)-2-naphthol chloride (C.I. 12250; Basic Brown No. 16), 1-[(4-amino-2-nitrophenyl)azo]-7-(trimethylammonio)-2-naphthol chloride (Basic Brown No. 17), 2-hydroxy-1-[(2-methoxyphenyl)azo]-7-(trimethylammonio)naphthalene chloride (C.I. 12245; Basic Red No. 76), 3-methyl-1-phenyl-4-{[3-(trimethylammonio)phenyl]azo}pyrazol-5-one chloride (C.I. 12719; Basic Yellow No. 57) and 2,6-diamino-3-[(pyridin-3-yl)azo]pyridine as well as the salts thereof. Particularly preferred among the aforesaid direct dyes are the following compounds, alone or in combination with one another: hydroxyethyl-2-nitro-p-toluidine, 2-hydroxyethylpicramic acid, 4-nitrophenylaminourea, tri(4-amino-3-methylphenyl)carbenium chloride (Basic Violet 2), 1,4-di-amino-9,10-anthracenedione (Disperse Violet 1), 1-(2-hydroxy-ethyl)amino-2-nitro-4-[di(2-hydro-xyethyl)amino]benzene (HC Blue No. 2), 4-[ethyl-(2-hydroxyethyl)amino]-1-[(2-hydroxyethyl)amino]-2-nitrobenzene hydrochloride (HC Blue No. 12), 1-amino-4-[di(2-hydroxyethyl)amino]-2-nitrobenzene hydrochloride (HC Red No. 13), 4-amino-1-[(2-hydroxyethyl)amino]-2-nitrobenzene (HC Red No. 3), 4-amino-3-nitrophenol, 4-[(2-hydroxyethyl)amino]-3-nitrophenol, 1-amino-5-chloro-4-[(2,3-dihydroxypropyl)amino]-2-nitrobenzene (HC Red No. 10), 5-chloro-1,4-[di(2,3-dihydroxypropyl)-amino]-2-nitrobenzene (HC Red No. 11), 2-chloro-6-ethylamino-4-nitrophenol, 2-amino-6-chloro-4-nitrophenol, 4-[(2-hydroxyethyl)amino]-3-nitro-1-trifluoromethylbenzene (HC Yellow No. 13), 8-amino-2-bromo-5-hydroxy-4-imino-6-{[3-(trimethylammonio)-phenyl]amino}-1(4H)-naphthalenone chloride (C.I. 56059; Basic Blue No. 99), 1-[(4-aminophenyl)azo]-7-(trimethylammonio)-2-naphthol chloride (C.I. 12250; Basic Brown No. 16), 1-[(4-amino-2-nitrophenyl)azo]-7-(trimethylammonio)-2-naphthol chloride (Basic Brown No. 17), 2-hydroxy-1-[(2-methoxyphenyl)azo]-7-(trimethylammonio)naphthalene chloride (C.I. 12245; Basic Red No. 76), 3-methyl-1-phenyl-4-{[3-(trimethylammonio)phenyl]azo}pyrazol-5-one chloride (C.I. 12719; Basic Yellow No. 57) and 2,6-diamino-3-[(pyridin-3-yl)azo]pyridine as well as the salts thereof. In at least one embodiment, the total quantity of direct dyes in the formulation amounts to 0.01 to 15 wt.-%, preferably 0.1 to 10 wt.-%, most preferred 0.5 to 8 wt.-%.

In at least one embodiment, the formulation comprises a conditioning agent. In at least one embodiment, the conditioning agent is a water insoluble, water dispersible, non-volatile, liquid that forms emulsified, liquid particles. In at least one embodiment, the conditioning agent is a silicone (e.g., silicone oil, cationic silicone, silicone gum, high refractive silicone, or silicone resin), an organic conditioning oil (e.g., hydrocarbon oils, polyolefins, or fatty esters), a cationic conditioning surfactant, a high melting point fatty compound, or combinations thereof.

In at least one embodiment, the conditioning agent is a silicone, and the formulation comprises from 0.01 % to 10 %, or from 0.1 % to 5 % silicone conditioning agent, by total weight of the formulation. Suitable silicone conditioning agents, and optional suspending agents for the silicone, are described in US-5,104,646. In at least one embodiment, the formulation comprises a silicone gum selected from the group consisting of polydimethylsiloxane, (polydimethylsiloxane) (methylvinylsiloxane) copolymer, poly(dimethylsiloxane) (diphenylsiloxane) (methylvinylsiloxane) copolymer, and mixtures thereof.

In at least one embodiment, the formulation comprises a terminal aminosilicone. "Terminal aminosilicone" as defined herein means silicone comprising one or more amino groups at one or both ends of the silicone backbone. In at least one embodiment, the formulation is substantially free of any silicone compound comprising pendant amino groups. In an embodiment, the formulation is substantially free of any silicone compound other than terminal aminosilicones. In at least one embodiment, the amino group at at least one terminus of the silicone backbone of the terminal aminosilicone is selected from the group consisting of primary amines, secondary amines and tertiary amines. In at least one embodiment, the formulation comprises a terminal aminosilicone conforming to Formula (S):

$$(R^F)_aG_{3-a}\text{-Si-}(\text{-OSiG}_2)_n\text{-O-SiG}_{3-a}(R^F)_a \qquad (S)$$

wherein

G is hydrogen, phenyl, hydroxy, or $C_1$-$C_8$ alkyl, preferably methyl;
a is an integer having a value from 1 to 3, preferably 1;
b is 0, 1 or 2, preferably 1;
n is a number from 0 to 1,999;
$R^F$ is a monovalent radical conforming to the general formula $C_qH_{2q}L$, wherein q is an integer having a value from 2 to 8 and L is selected from the following groups: $-N(R^T)CH_2-CH_2-N(R^T)_2$; $-N(R^T)_2$; $-N(R^T)_3A^-$; $-N(R^T)CH_2-CH_2-NR^TH_2A^-$; wherein $R^T$ is hydrogen, phenyl, benzyl, or a saturated hydrocarbon radical, preferably an alkyl radical having from 1 to 20 carbon atoms; $A^-$ is a halide ion.

In at least one embodiment, the terminal aminosilicone corresponding to Formula (S) has a = 1, q = 3, G = methyl, n is from 1000 to 2500, alternatively from 1500 to 1700, and L is $-N(CH_3)_2$. A suitable terminal aminosilicone corresponding to Formula (S) has a = O, G = methyl, n is from 100 to 1500, or from 200 to 800, and L is selected from the following groups: $-N(R^T)CH_2-CH_2-N(R^T)_2$; $-N(R^T)_2$; $-N(R^T)_3A^-$; $-N(R^T)CH_2-CH_2-NR^TH_2A^-$; wherein $R^T$ is hydrogen, phenyl, benzyl, or a saturated hydrocarbon radical, preferably an alkyl radical from having from 1 to 20 carbon atoms; $A^-$ is a halide ion, alternatively L is $-NH_2$. In at least one embodiment, the terminal aminosilicone is selected from the group consisting of bis-aminomethyl dimethicone, bis-aminoethyl dimethicone, bis-aminopropyl dimethicone, bis-aminobutyl dimethicone, and mixtures thereof. In an embodiment, the viscosity of the terminal aminosilicone is from 1,000 to 30,000 cPs, or from 5,000 to 20,000 cPs, measured at 25°C. In at least one embodiment, the formulation comprises from 0.1 % to 20 %, or from 0.5 % to 10 %, or from 1 % to 6 % terminal aminosilicone, by total weight of the formulation.

In at least one embodiment, the formulation comprises a high melting point fatty compound. The high melting point fatty compound has a melting point of 25°C or higher. In at least one embodiment, the high melting point fatty compound is selected from the group consisting of a fatty alcohol, fatty acid, fatty alcohol derivative, fatty acid derivative, and mixtures thereof. Non-limiting examples of the high melting point compounds are found in International Cosmetic Ingredient Dictionary, Fifth Edition, 1993, and CTFA Cosmetic Ingredient Handbook, Second Edition, 1992. The formulation may comprise from 0.1 % to 40 %, or from 1 % to 30 %, or from 1.5 % to 16 %, or from 1.5 % to 8 % of a high melting point fatty compound, by total weight of the formulation. This is advantageous in view of providing improved conditioning benefits such as slippery feel during the application to wet hair, softness and moisturized feel on dry hair. In at least one embodiment, the fatty alcohol is selected from the group consisting of: cetyl alcohol, stearyl alcohol, behenyl alcohol, and mixtures thereof. In at least one embodiment, the formulation comprises a linear fatty alcohol, wherein the linear fatty alcohol is comprised in a lamellar gel matrix. A lamellar gel matrix is suitable for providing various conditioning benefits such as slippery feel during the application to wet hair and softness and moisturized feel on dry hair. The linear fatty alcohol may comprise from 8 to 24 carbon atoms. In an embodiment, the linear fatty alcohol is selected from the group consisting of: cetyl alcohol, stearyl alcohol, and mixtures thereof. In an embodiment, the weight ratio of total linear fatty alcohol to terminal aminosilicone is from 0.5:1 to 10:1, or from 1:1 to 5:1, or from 2.4:1 to 2.7:1.

In at least one embodiment, the lamellar gel matrix comprises a cationic conditioning surfactant and a high melting point fatty compound. In view of providing the lamellar gel matrix, the cationic conditioning surfactant and the high melting point fatty compound are contained at a level such that the weight ratio of the cationic surfactant to the high melting point fatty compound is in the range of from 1:1 to 1:10, or from 1:1 to 1:6.

In at least one embodiment, the formulation comprises a cationic conditioning surfactant. In at least one embodiment, the formulation comprises from 0.05 % to 3.0 %, or from 0.075 % to 2.0 %, or from 0.1 % to 1.0 %, of cationic conditioning surfactant by total weight of the formulation. In at least one embodiment, the cationic conditioning surfactant is comprised in a lamellar gel matrix. In other words, the formulation comprises a lamellar gel matrix and the lamellar gel matrix comprises the cationic conditioning surfactant. In an embodiment, cationic conditioning surfactant is according to Formula (C):

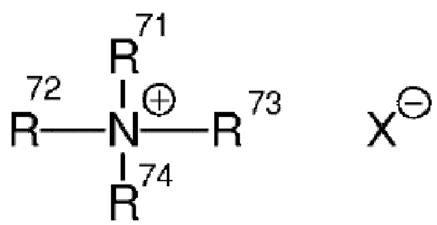

(C)

wherein at least one of $R^{71}$, $R^{72}$, $R^{73}$ and $R^{74}$ is selected from an aliphatic group of from 8 to 30 carbon atoms, an aromatic, alkoxy, polyoxyalkylene, alkylamido, hydroxyalkyl, aryl, or an alkylaryl group having up to 22 carbon atoms; the remainder of $R^{71}$, $R^{72}$, $R^{73}$ and $R^{74}$ are independently selected from the group consisting of an aliphatic group of

from 1 to 22 carbon atoms, and an aromatic, alkoxy, polyoxyalkylene, alkylamido, hydroxyalkyl, aryl or alkylaryl group having up to 22 carbon atoms;

X is selected from the group consisting of: halogen, acetate, citrate, lactate, glycolate, phosphate, nitrate, sulfonate, sulfate, alkylsulfate, alkyl sulfonate, and combinations thereof.

In at least one embodiment, the cationic conditioning surfactant is selected from the group consisting of behenyl trimethyl ammonium chloride, methyl sulfate or ethyl sulfate, and stearyl trimethyl ammonium chloride, methyl sulfate or ethyl sulfate. It is believed that a longer alkyl group provides improved smoothness and soft feeling on wet and dry hair, compared to cationic surfactants with a shorter alkyl group. It is also believed that such cationic surfactants can provide reduced irritation, compared to those having a shorter alkyl group.

In at least one embodiment, the cationic surfactant is a di-long alkyl quaternized ammonium salt selected from the group consisting of: dialkyl (C14-C18) dimethyl ammonium chloride, ditallow alkyl dimethyl ammonium chloride, dihydrogenated tallow alkyl dimethyl ammonium chloride, distearyl dimethyl ammonium chloride, dicetyl dimethyl ammonium chloride, and mixtures thereof.

In at least one embodiment, the cationic surfactant is a tertiary amido amine having an alkyl group of from 12 to 22 carbons. The tertiary amido amine may be selected from the group consisting of stearamidopropyldimethyl-, stearamidopropyldiethyl-, stearamidoethyldiethyl-, stearamidoethyldimethyl-, palmitamidopropyldimethyl-, palmitamidopropyldiethyl-, palmitamidoethyldiethyl-, palmitamidoethyldimethyl-, behenamidopropyldimethyl-, behenamidopropyldiethyl-, behenamidoethyldiethyl-, behenamidoethyldimethyl-, arachidamidopropyldimethyl-, arachidamidopropyldiethyl-, arachidamidoethyldiethyl-, and arachidamidoethyldimethyl-amine, diethylaminoethylstearamide, and mixtures thereof. A tertiary amido amine may be used in combination with an acid. The acid is typically used as a salt-forming anion. In an embodiment, the acid is selected from the group consisting of lactic acid, malic acid, hydrochloric acid, 1-glumatic acid, acetic acid, citric acid, and mixtures thereof.

In at least one embodiment, the cationic surfactant is selected from the group consisting of cetyltrimonium chloride (CTAC), stearyltrimonium chloride (STAC), behentrimonium methosulfate, stearoylamidopropyldimethyl amine (SAPDMA), distearyldimethylammonium chloride, and mixtures thereof.

In at least one embodiment, the formulation comprises a surfactant system. In at least one embodiment, the surfactant system comprises a surfactant selected from the group consisting of anionic surfactants, cationic surfactants, non-ionic surfactants, zwitterionic surfactants and/or amphoteric surfactants. In at least one embodiment, the formulation comprises a total amount of surfactant of from 0.01 wt.-% to 70 wt.-%, from 0.1 wt.-% to 40 %, from 1 wt.-% to 30 %, from 2 wt.-% to 20 wt.-%.

In at least one embodiment, the formulation comprises an anionic surfactant. In at least one embodiment, the anionic surfactant is selected from the group consisting of ($C_{10}$-$C_{20}$)-alkyl and alkylene carboxylates, alkyl ether carboxylates, fatty alcohol sulfates, fatty alcohol ether sulfates, alkylamide sulfates and sulfonates, fatty acid alkylamide polyglycol ether sulfates, alkanesulfonates and hydroxyalkanesulfonates, olefinsulfonates, acyl esters of isethionates, alpha-sulfo fatty acid esters, alkylbenzenesulfonates, alkylphenol glycol ether sulfonates, sulfosuccinates, sulfosuccinic monoesters and diesters, fatty alcohol ether phosphates, protein/fatty acid condensation products, alkyl monoglyceride sulfates and sulfonates, alkylglyceride ether sulfonates, fatty acid methyltaurides, fatty acid sarcosinates, sulforicinoleates, acylglutamates, and mixtures thereof. The anionic surfactants (and their mixtures) can be used in the form of their water-soluble or water-dispersible salts, examples being the sodium, potassium, magnesium, ammonium, mono, di-, and triethanolammonium, and analogous alkylammonium salts. In at least one embodiment, the anionic surfactant is the salt of an anionic surfactant comprising 12 to 14 carbon atoms. In at least one embodiment, the anionic surfactant is selected from the group consisting of sodium lauryl sulfate, sodium laureth sulfate, sodium tridecyl sulfate, sodium trideceth sulfate, sodium myristyl sulfate, sodium myreth sulfate, and mixtures thereof.

In at least one embodiment, the formulation comprises an acylglycinate surfactant. In at least one embodiment, the acylglycinate surfactant conforms to the formula (Y):

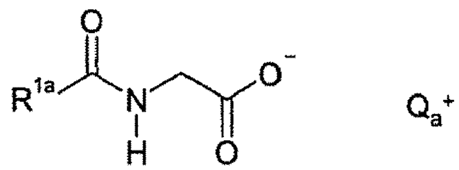

(Y)

wherein

$R^{1a}$ is a linear or branched, saturated alkyl group having 6 to 30, preferably 8 to 22, particularly preferably 8 to 18

carbon atoms or is a linear or branched, mono- or polyunsaturated alkenyl group having 6 to 30, preferably 8 to 22, particularly preferably 12 to 18 carbon atoms, and

$Q_a^+$ is a cation.

In at least one embodiment, $Q_a^+$ is selected from the group consisting of $Li^+$, $Na^+$, $K^+$, $Mg^{++}$, $Ca^{++}$, $Al^{+++}$, $NH4^+$, a monoalkylammmonium ion, a dialkylammonium ion, a trialkylammonium ion and a tetraalkylammonium ion, or combinations thereof. In at least one embodiment, the acylglycinate surfactant is selected from sodium cocoylglycinate and potassium cocoylglycinate. In at least one embodiment, the acylglycinate surfactant is selected from those conforming to formula (Y), wherein R is $C_{12}$ alkyl or $C_{14}$ alkyl. In at least one embodiment, the acylglycinate surfactant is selected from those conforming to formula (Y), wherein R is $C_{16}$ alkyl or $C_{18}$ alkyl.

In at least one embodiment, the formulation comprises a glutamate surfactant corresponding to formula (Z) or a salt thereof:

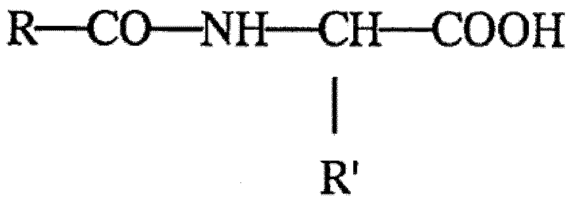

(Z)

wherein

R' is HOOC-CH2-CH2- or $M^{+-}$OOC-CH2-CH2- wherein $M^+$ is a cation;

R is a linear or branched, saturated alkyl group having 6 to 30, preferably 8 to 22, more preferably 8 to 18 carbon atoms or is a linear or branched, mono- or polyunsaturated alkenyl group having 6 to 30, preferably 8 to 22, more preferably 12 to 18 carbon atoms. In at least one embodiment, $M^+$ is a metal cation. In at least one embodiment, $M^+$ is selected from the group consisting of $Li^+$, $Na^+$, $K^+$, $Mg^{++}$, $Ca^{++}$, $Al^{+++}$, $NH4^+$, a monoalkylammmonium ion, a dialkylammonium ion, a trialkylammonium ion and a tetraalkylammonium ion, or combinations thereof.

In at least one embodiment, the glutamate surfactant is selected from sodium cocoyl glutamate and potassium cocoyl glutamate. In at least one embodiment, the glutamate surfactant is selected from those conforming to formula (Z), wherein R is $C_{12}$ alkyl or $C_{14}$ alkyl. In at least one embodiment, the glutamate surfactant is selected from those conforming to formula (Z), wherein R is $C_{16}$ alkyl or $C_{18}$ alkyl.

In at least one embodiment, the formulation comprises from 0.01 wt.-% to 30 wt.-%, preferably from 1 wt.-% to 25 wt.-%, more preferably from 5 wt.-% to 20 wt.-%, particularly preferably from 12 wt.-% to 18 wt.-% anionic surfactant.

In at least one embodiment, the formulation comprises a non-ionic surfactant. In at least one embodiment, the non-ionic surfactant has an HLB (Hydrophilic Lipophilic Balance) of greater than 12. Optionally, the non-ionic surfactant is selected from the group consisting of ethoxylated or ethoxylated/propoxylated fatty alcohols with a fatty chain having 12 to 22 carbon atoms, ethoxylated sterols, such as stearyl- or lauryl alcohol (EO-7), PEG-16 soya sterol or PEG-10 soya sterol, polyoxyethylene polyoxypropylene block polymers (poloxamers), and mixtures thereof.

In at least one embodiment, the non-ionic surfactant is selected from the group consisting of ethoxylated fatty alcohols, fatty acids, fatty acid glycerides or alkylphenols, in particular addition products of from 2 to 30 mol of ethylene oxide and/or 1 to 5 mol of propylene oxide onto $C_8$- to $C_{22}$-fatty alcohols, onto $C_{12}$- to $C_{22}$-fatty acids or onto alkyl phenols having 8 to 15 carbon atoms in the alkyl group, $C_{12}$- to $C_{22}$-fatty acid mono- and diesters of addition products of from 1 to 30 mol of ethylene oxide onto glycerol, addition products of from 5 to 60 mol of ethylene oxide onto castor oil or onto hydrogenated castor oil, fatty acid sugar esters, in particular esters of sucrose and one or two $C_8$- to $C_{22}$-fatty acids, INCI: Sucrose Cocoate, Sucrose Dilaurate, Sucrose Distearate, Sucrose Laurate, Sucrose Myristate, Sucrose Oleate, Sucrose Palmitate, Sucrose Ricinoleate, Sucrose Stearate, esters of sorbitan and one, two or three $C_8$- to $C_{22}$-fatty acids and a degree of ethoxylation of from 4 to 20, polyglyceryl fatty acid esters, in particular of one, two or more $C_8$- to $C_{22}$-fatty acids and polyglycerol having preferably 2 to 20 glyceryl units, alkyl glucosides, alkyl oligoglucosides and alkyl polyglucosides having $C_8$ to $C_{22}$-alkyl groups, e.g. decylglucoside or laurylglucoside, and mixtures thereof.

In at least one embodiment, the non-ionic surfactant is selected from the group consisting of fatty alcohol ethoxylates (alkylpolyethylene glycols), alkylphenol polyethylene glycols, alkylmercaptan polyethylene glycols, fatty amine ethoxylates (alkylaminopolyethylene glycols), fatty acid ethoxylates (acylpolyethylene glycols), polypropylene glycol ethoxylates (e.g. Pluronics®), fatty acid alkylol amides (fatty acid amide polyethylene glycols), N-alkyl-, N-alkoxypolyhydroxy-fatty acid amides, sucrose esters, sorbitol esters, polyglycol ethers, and mixtures thereof.

In at least one embodiment, the formulation comprises a fatty N-methyl-N-glucamide surfactant, wherein the fatty N-methyl-N-glucamide surfactant conforms to the formula (X):

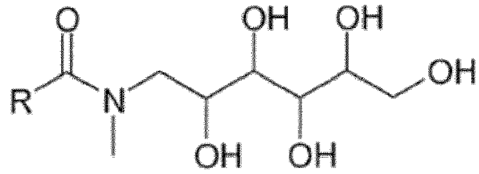

(X)

wherein R is selected from saturated or unsaturated hydrocarbon chains having 5 to 23 carbon atoms. Preferably, R in formula (X) is selected from saturated or unsaturated hydrocarbon chains having 7 to 17 carbon atoms. Also preferably, the R-C=O residue in formula (X) is derived from caprylic acid, capric acid, lauric acid, myristic acid, palmitic acid, stearic acid, oleic acid, linoleic acid, linolenic acid, coconut fatty acids, or mixtures thereof. Also preferably, the R-C=O residue in formula (X) is derived from 9-decenoic acid, 9-dodecenoic acid, or mixtures thereof.

Particularly preferred N-methyl-N-acylglucamines of formula (X) are capryloyl/caproyl methyl glucamide, lauroyl/myristoyl methyl glucamide, cocoyl methyl glucamide, oleyl methyl glucamide, or mixtures thereof. Such N-methyl-N-acylglucamines are commercially available from Clariant (GlucoTain® Clear, GlucoTain® Plus, GlucoTain® Flex, GlucoTain® Care, GlucoTain® Sense).

Also particularly preferred N-methyl-N-acylglucamines of formula (X) are N-9-decenoyl-N-methylglucamine, N-9-dodecenoyl-N-methylglucamine, or mixtures thereof.

In at least one embodiment, the formulation comprises from 1 wt.-% to 20 wt.-%, preferably from 2 wt.-% to 10 wt.-%, more preferably from 3 wt.-% to 7 wt.-% non-ionic surfactant.

In at least one embodiment, the amphoteric surfactants are selected from the group consisting of N-($C_{12}$-$C_{18}$)-alkyl-β-aminopropionates and N-($C_{12}$-$C_{18}$)-alkyl-β-iminodipropionates as alkali metal salts and mono-, di-, and trialkylammonium salts; N-acylaminoalkyl-N,N-dimethylacetobetaine, preferably N-($C_8$-$C_{18}$)-acylaminopropyl-N,N-dimethylacetobetaine, ($C_{12}$-$C_{18}$)-alkyl-dimethyl-sulfopropylbetaine, amphosurfactants based on imidazoline (e.g. Miranol®, Steinapon®), preferably the sodium salt of 1-(beta-carboxymethyloxyethyl)-1-(carboxymethyl)-2-laurylimidazolinium; amine oxides, e.g. ($C_{12}$-$C_{18}$)-alkyldimethylamine oxides, fatty acid amidoalkyldimethylamine oxides, and mixtures thereof.

In at least one embodiment, the formulation comprises a betaine surfactant. Optionally, the betaine surfactant is selected from $C_8$- to $C_{18}$-alkylbetaines. In at least one embodiment, the betaine surfactant is selected from the group consisting of cocodimethylcarboxymethylbetaine, lauryldimethylcarboxymethylbetaine, lauryldimethylalphacarboxyethylbetaine, cetyldimethylcarboxymethylbetaine, oleyldimethylgammacarboxypropylbetaine and laurylbis(2-hydroxypropyl)alphacarboxyethylbetaine, and combinations thereof. Optionally, the betaine surfactant is selected from $C_8$- to $C_{18}$-sulfobetaines. In at least one embodiment, the betaine surfactant is selected from the group consisting of cocodimethylsulfopropylbetaine, stearyldimethylsulfopropylbetaine, lauryldimethylsulfoethylbetaine, laurylbis(2-hydroxyethyl)sulfopropylbetaine, and combinations thereof. Optionally, the betaine surfactant is selected from carboxyl derivatives of imidazole, the $C_8$- to $C_{18}$-alkyldimethylammonium acetates, the $C_8$- to $C_{18}$-alkyldimethylcarbonylmethylammonium salts, and the $C_8$- to $C_{18}$-fatty acid alkylamidobetaines, and mixtures thereof. Optionally, the $C_8$- to $C_{18}$-fatty acid alkylamidobetaine is selected from coconut fatty acid amidopropylbetaine, N-coconut fatty acid amidoethyl-N-[2-(carboxymethoxy)ethyl]glycerol (CTFA name: Cocoamphocarboxyglycinate), and mixtures thereof.

In at least one embodiment, the formulation comprises from 0.5 wt.-% to 20 wt.-%, preferably from 1 wt.-% to 10 wt.-% amphoteric surfactant.

In at least one embodiment, the formulation comprises a surfactant system. In at least one embodiment, the surfactant system comprises at least one surfactant selected from the group consisting of lauryl sulfate, laureth sulfate, cocoamidopropylbetaine, sodium cocoylglutamate, lauroamphoacetate, and mixtures thereof. In at least one embodiment, the surfactant system comprises sodium laureth sulphate, sodium lauryl sulphate, and optionally cocamidopropyl betaine. In at least one embodiment, the surfactant system comprises sodium laureth sulphate, potassium cocoyl glutamate, and cocamidopropyl betaine.

In at least one embodiment, the formulation further comprises a hairstyling polymer. In at least one embodiment, the hairstyling polymer is selected from the group consisting of: amphoteric hairstyling polymers, zwitterionic hairstyling polymers, anionic hairstyling polymers, non-ionic hairstyling polymers, cationic hairstyling polymers, and mixtures thereof. In at least one embodiment, the formulation comprises from 0.01 % to 20 %, or from 0.01 % to 16 %, or from 0.01 % to

10 %, or from 1 % to 8 %, or from 2 % to 6 % of hairstyling polymer. Suitable hairstyling polymers are disclosed in, e.g., WO2018/002100 (pages 55-63).

In at least one embodiment, the formulation has a viscosity of from 0 cPs to 20,000 cPs. In at least one embodiment, the formulation has a viscosity of from 0.1 cPs to 10,000 cPs, or from 1 cPs to 5,000 cPs, or from 5 cPs to 3,500 cPs.

The viscosity measurement conditions are defined in the definitions section above. Viscosity may be important for anti-drip reasons. Dripping can be inconvenient for the user. Furthermore, more viscous formulations can be useful for measured dispensing. In at least one embodiment, the formulation has a viscosity of from 0 cPs to 1,000 cPs. This viscosity range is advantageous when the formulation is in the form of a facial cleanser in view of the need for distribution on skin and ability to rinse off.

In at least one embodiment, the formulation further comprises a viscosity-modifying substance. The viscosity-modifying substance is preferably a thickening polymer.

In at least one embodiment, the thickening polymer is a polymer based on acrylamidomethylpropanesulfonic acid (AMPS®). These polymers, even at pH values of 7 or less, exhibit good thickening performance. Especially preferably, the thickening polymer is selected from the group consisting of homo- or copolymers of acrylamidomethylpropanesulfonic acid and salts thereof. Among the polymers just mentioned, preference is given to polymers having at least 20 mol-% of units based on acrylamidomethylpropanesulfonic acid and/or salts thereof, and particular preference to polymers having at least 50 mol-% of units based on acrylamidomethylpropanesulfonic acid and/or salts thereof, the mole figures relating in each case to the overall polymer. In the case of the copolymers, in addition to structural units based on acrylamidomethylpropanesulfonic acid and/or salts thereof, preferably one or more structural units based on the following comonomers are present in the copolymers: acrylic acid, methacrylic acid, acrylamide, dimethylacrylamide, vinylpyrrolidone (VP), hydroxyethyl acrylate, hydroxyethyl methacrylate, acrylic or methacrylic esters of ethoxylated alcohols $RO-(CH_2CH_2O)_mH$, in which R is an alkyl radical having 12 to 30 carbon atoms and m is a number from 3 to 30, and $CH_2=CH-COO-(CH_2CH_2-COO)_nX$, in which n is a number from 0 to 10 and X is a counterion and is preferably $H^+$, $Na^+$ and/or $NH4^+$. The polymers selected from the group consisting of homo- or copolymers of acrylamidomethylpropanesulfonic acid and salts thereof may be crosslinked or non-crosslinked. In the case of crosslinking, they contain structural units based on monomers having 2 or more olefinic double bonds. In the case of crosslinking, preferably from 0.1 to 10 mol-% of such structural units are present in the homo- or copolymers, based on the overall polymer. If one or more structural units based on acrylamidomethylpropanesulfonic acid and/or salts thereof in the homo- or copolymers of acrylamidomethylpropanesulfonic acid and/or salts thereof have one or more counterions other than $H^+$, these other counterions are preferably selected from the group consisting of $Na^+$ and $NH4^+$. Suitable polymers are mentioned in publications including EP-0816403, EP-1069142, EP-1116733 and DE-10 2009 014877 (Clariant), EP-1347736 (L'Oréal) or EP-1496081 (Seppic). Examples include: Aristoflex® AVC (Ammonium Acryloyldimethyltaurate/VP Copolymer), Aristoflex® AVS (Sodium Acryloyldimethyltaurate/VP Crosspolymer), Aristoflex® TAC (Ammonium Acryloyl Dimethyltaurate Carboxyethyl Acrylate Crosspolymer), Hostacerin® AMPS (Ammonium Polyacryloyldimethyl Taurate), Aristoflex® HMB (Ammonium Acryloyldimethyltaurate/Beheneth-25 Methacrylate Crosspolymer), Aristoflex® BLV (Ammonium Acryloyldimethyltaurate/Beheneth-25 Methacrylate Crosspolymer), Aristoflex® HMS (Ammonium Acryloyldimethyltaurate/Steareth-25 Methacrylate Crosspolymer), Aristoflex® SNC (Ammonium Acryloyldimethyltaurate/Steareth-8 Methacrylate Copolymer), Aristoflex® LNC (Ammonium Acryloyldimethyltaurate/Laureth-7 Methacrylate Copolymer) or Sepinov® EMT 10 (Hydroxyethyl Acrylate/Sodium Acryloyldimethyl Taurate Copolymer), Sepigel® 305.

In at least one embodiment, the thickening polymer is selected from the group consisting of: copolymers of at least one first monomer type, which is chosen from acrylic acid and methacrylic acid, and at least one second monomer type, which is chosen from esters of acrylic acid and ethoxylated fatty alcohol; crosslinked polyacrylic acid; crosslinked copolymers of at least one first monomer type, which is chosen from acrylic acid and methacrylic acid, and at least one second monomer type, which is chosen from esters of acrylic acid with $C_{10}$- to $C_{30}$-alcohols; copolymers of at least one first monomer type, which is chosen from acrylic acid and methacrylic acid, and at least one second monomer type, which is chosen from esters of itaconic acid and ethoxylated fatty alcohol; copolymers of at least one first monomer type, which is chosen from acrylic acid and methacrylic acid, at least one second monomer type, which is chosen from esters of itaconic acid and ethoxylated $C_{10}$- to $C_{30}$-alcohols, and a third monomer type, which is chosen from $C_1$- to $C_4$-aminoalkyl acrylates; copolymers of two or more monomers chosen from acrylic acid, methacrylic acid, acrylic esters and methacrylic esters; copolymers of vinylpyrrolidone and ammonium acryloyldimethyltaurate; copolymers of ammonium acryloyldimethyltaurate and monomers chosen from esters of methacrylic acid and ethoxylated fatty alcohols; hydroxyethylcellulose; hydroxypropylcellulose; hydroxypropylguar; glyceryl polyacrylate; glyceryl polymethacrylate; copolymers of at least one $C_2$-, $C_3$- or $C_4$-alkylene and styrene; polyurethanes; hydroxypropyl starch phosphate; polyacrylamide; copolymers of maleic anhydride and methyl vinyl ether crosslinked with decadiene; carob seed flour; guar gum; xanthan; dehydroxanthan; carrageenan; karaya gum; hydrolyzed corn starch; copolymers of polyethylene oxide, fatty alcohols and saturated methylenediphenyl diisocyanate (e.g. PEG-150/stearyl alcohol/SMDI copolymer); and mixtures thereof.

In at least one embodiment, the formulation has a pH value of from 2.0 to 12.0, preferably from 3.0 to 9.0, more

preferably from 4.5 to 7.5. By varying the pH value, a formulation can be made available that is suitable for different applications.

In at least one embodiment, the formulation comprises an alkalizing agent or pH adjusting agent. In at least one embodiment, ammonia or caustic soda is suitable, but water-soluble, physiologically tolerable salts of organic or inorganic bases can also be considered. Optionally, the pH adjusting agent is selected from ammonium hydrogen carbonate, ammonia, monoethanolamine, ammonium carbonate. In at least one embodiment, the alkalizing agent or pH adjusting agent is selected from the group consisting of 2-amino-2-methyl-1-propanol, 2-amino-2-methyl-1,3- propanediol, 2-amino-2-ethyl-1,3-propanediol, tris(hydroxymethyl)-aminomethane, 2-amino-1-butanol, tris(2-hydroxypropyl)-amine, 2,2-iminobisethanol, lysine, iminourea (guanidine carbonate), tetrahydro-1,4-oxazine, 2-amino-5-guanidinvaleric acid, 2-aminoethansulfonic acid, diethanolamine, triethanolamine, N-methyl ethanolamine, isopropanolamine, diisopropanolamine, triisopropanolamine, glucamine, sodium hydroxide, potassium hydroxide, lithium hydroxide, magnesium oxide, and mixtures thereof.

To establish an acidic pH value, an acid can be included. In at least one embodiment, the formulation comprises an acid selected from the group consisting of hydrochloric acid, phosphoric acid, acetic acid, formic acid, sulfuric acid, citric acid, and mixtures thereof. Citric acid is most preferred in that it has high consumer acceptance. In at least one embodiment, the acidic pH is adjusted with a buffer such as a phosphate buffer, a TRIS buffer or a citric buffer. The buffers may be used alone or in combination with an acid.

In at least one embodiment, the formulation is in liquid form. In an alternative embodiment, the formulation is in solid form. Optionally, the formulation is in powdered or granulated form. This is advantageous in that it is not needed to ship liquid, which is typically heavy, over long distances, which has economic and environmental benefits. A solid form can be achieved by spray drying the formulation or by using a rotary evaporator. The formulation can be converted into liquid form after it has been shipped, e.g. by adding water.

In at least one embodiment, the formulation is a household cleansing formulation.

In at least one embodiment, the formulation is a hand dishwashing formulation. In at least one embodiment, the hand dishwashing formulation comprises an anionic surfactant. In at least one embodiment, the hand dishwashing formulation comprises from 5 wt.-% to 25 wt.-% anionic surfactant. In at least one embodiment, the hand dishwashing formulation comprises a surfactant system comprising at least one anionic surfactant and a further surfactant selected from non-ionic surfactants, amphoteric surfactants, zwitterionic surfactants, and combinations thereof.

Preferably, the hand dishwashing formulation comprises cocoamidopropylbetaine or an amine oxide. Preferably, the amine oxide is lauryl amine oxide, cocoyl amine oxide, or a combination thereof. In at least one embodiment, the pH value of the hand dishwashing formulation is between pH 5.0 and pH 10, preferably between pH 5.5 and pH 9.0. In the case of the hand dishwashing formulation comprising an amine oxide, the hand dishwashing formulation preferably has a pH of between pH 7.5 and pH 9.5, most preferably between pH 8.0 and pH 9.0.

In at least one embodiment, the formulation is a hard surface cleaner. In at least one embodiment, the hard surface cleaner comprises an anionic surfactant. In at least one embodiment, the hard surface cleaner comprises from 1 wt.-% to 10 wt.-% anionic surfactant. In at least one embodiment, the hard surface cleaner comprises a nonionic surfactant. In at least one embodiment, the hard surface cleaner comprises from 1 wt.-% to 10 wt.-% nonionic surfactant. In at least one embodiment, the hard surface cleaner comprises a surfactant system comprising at least one anionic surfactant and a further surfactant selected from non-ionic surfactants, amphoteric surfactants, zwitterionic surfactants, and combinations thereof. Preferably, the hard surface cleaner comprises linear alkylbenzene sulfonate and fatty alcohol ethoxylate. In at least one embodiment, the pH value of the hard surface cleaner is between pH 5.0 and pH 11, preferably between pH 6.0 and pH 9.0.

In at least one embodiment, the formulation is a liquid laundry detergent formulation comprising one or more surfactants. Preferably, the one or more surfactants of the liquid laundry detergent formulation are selected from the group consisting of anionic, nonionic, cationic and zwitterionic surfactants, and more preferably from the group consisting of anionic, nonionic and zwitterionic surfactants.

## Anionic Surfactants

In at least one embodiment, the formulation comprises an anionic surfactant.

Anionic surfactants are particularly useful in cleansing formulations such as household cleansing formulations. Preferred anionic surfactants are alkyl sulfonates and alkyl ether sulfates. Preferred alkyl sulfonates are alkylbenzene sulfonates, particularly linear alkylbenzene sulfonates (LAS) having an alkyl chain length of $C_8$-$C_{15}$, preferably $C_{12}$-$C_{14}$. Possible counterions for concentrated alkaline liquids are ammonium ions, e.g. those generated by the neutralization of alkylbenzene sulfonic acid with one or more ethanolamines, for example monoethanolamine (MEA) and triethanolamine (TEA), or alternatively, alkali metals, e.g. those arising from the neutralization of alkylbenzene sulfonic acid with alkali hydroxides. Preferred alkyl ether sulfates (AES) are alkyl polyethoxylate sulfate anionic surfactants.

Nonionic Surfactants

In at least one embodiment, the formulation comprises a nonionic surfactant. Nonionic surfactants include primary and secondary alcohol ethoxylates, especially $C_8$-$C_{20}$ aliphatic alcohols ethoxylated with an average of from 1 to 20 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol. Non-ethoxylated nonionic surfactants include alkyl polyglycosides, glycerol monoethers and polyhydroxy amides (glucamides). Mixtures of nonionic surfactants may also be used.

When included therein, the household cleansing formulation, particularly the liquid laundry detergent formulation, preferably comprises from 0.2 wt.-% to 40 wt.-%, more preferably from 1 wt.-% to 20 wt.-% nonionic surfactant, such as alcohol ethoxylate, nonylphenol ethoxylate, alkylpolyglycoside, alkyldimethylamineoxide, ethoxylated fatty acid monoethanolamide, fatty acid monoethanolamide, polyhydroxy alkyl fatty acid amide, N-acyl N-alkyl derivatives of glucosamine (glucamides), or combinations thereof. Nonionic surfactants that may be used include the primary and secondary alcohol ethoxylates, especially the $C_8$-$C_{20}$ aliphatic alcohols ethoxylated with an average of from 1 to 35 moles of ethylene oxide per mole of alcohol, and more especially the $C_{10}$-$C_{15}$ primary and secondary aliphatic alcohols ethoxylated with an average of from 1 to 10 moles of ethylene oxide per mole of alcohol.

Zwitterionic Surfactants

In at least one embodiment, the formulation comprises a zwitterionic surfactant. The liquid laundry detergent formulation may comprise a zwitterionic surfactant, e.g. amine oxide or betaine, preferably in an amount of up to 10 wt.-% based on the total weight of the liquid laundry detergent formulation. Betaines may be alkyldimethyl betaines or alkylamido betaines, wherein the alkyl groups have $C_{12}$-$C_{18}$ chains.

Additional Surfactants

In at least one embodiment, the liquid laundry detergent formulation comprises a surfactant selected from the group consisting of anionic surfactants, nonionic surfactants, and mixtures thereof; preferably the surfactant is selected from the group consisting of linear alkyl benzene sulfonates, alkyl ether sulfates, nonionic surfactants, amine oxides and betaines; and more preferably selected from the group consisting of linear alkyl benzene sulfonates, alkyl ether sulfates and nonionic surfactants. Other surfactants than the preferred LAS, AES, and nonionic surfactants may also be added. Although less preferred, alkyl sulfate surfactants may be used, especially the non-ethoxylated $C_{12}$-$C_{15}$ primary and secondary alkyl sulfates. Soap may also be used. Levels of soap are preferably lower than 10 wt.-%.

Preferably, the one or more surfactants in the liquid laundry detergent formulations are present in an amount of at least 5 wt.-%, preferably from 5 wt.-% to 65 wt.-%, more preferably from 6 wt.-% to 60 wt.-% and particularly preferably from 7 wt.-% to 55 wt.-%, in each case based on the total weight of the liquid laundry detergent formulation.

Further Optional Ingredients

The household cleansing formulations may comprise one or more optional ingredients, e.g. they may comprise conventional ingredients commonly used in detergent compositions, especially laundry detergent compositions. Examples of optional ingredients include, but are not limited to builders, bleaching agents, bleach active compounds, bleach activators, bleach catalysts, photobleaches, dye transfer inhibitors, color protection agents, anti-redeposition agents, dispersing agents, fabric softening and antistatic agents, fluorescent whitening agents, enzymes, enzyme stabilizing agents, foam regulators, defoamers, malodor reducers, preservatives, disinfecting agents, hydrotropes, fibre lubricants, anti-shrinkage agents, buffers, fragrances, processing aids, colorants, dyes, pigments, anti-corrosion agents, fillers, stabilizers or other conventional ingredients for washing or laundry detergent compositions.

Polymer

For detergency boosting, it may be advantageous to use a polymer in the household cleansing formulations, particularly in the liquid laundry detergent formulations. This polymer is preferably a polyalkoxylated polyethyleneimine (EPEI). Polyethylene imines are materials composed of ethylene imine units $-CH_2CH_2NH-$ and, where branched, the hydrogen on the nitrogen is replaced by another chain of ethylene imine units. These polyethyleneimines can be prepared, for example, by polymerizing ethyleneimine in the presence of a catalyst such as carbon dioxide, sodium bisulfite, sulfuric acid, hydrogen peroxide, hydrochloric acid, acetic acid, or the like. Specific methods for preparing these polyamine backbones are disclosed in US 2,182,306, US 3,033,746, US 2,208,095, US 2,806,839, and US 2,553,696.

The household cleansing formulations, particularly the liquid laundry detergent formulations, may comprise

other polymeric materials, for example: dye transfer inhibition polymers, anti-redeposition polymers or cotton soil release polymers, especially those based on modified cellulosic materials. Especially, when EPEI is not present, the formulation may further comprise a polymer of polyethylene glycol and vinyl acetate, for example the lightly grafted copolymers described in WO 2007/138054. Such amphiphilic graft polymers based on water soluble polyalkylene oxides as graft base and side chains formed by polymerization of a vinyl ester component have the ability to enable reduction of surfactant levels whilst maintaining high levels of oily soil removal.

Hydrotropes

In at least one embodiment, the formulation comprises a hydrotrope. Herein "hydrotrope" is a solvent that is neither water nor conventional surfactant, and that aids the solubilisation of surfactants and other components, especially any polymer and/or sequestrant, in the liquid, to render it isotropic. Hydrotropes are particularly useful in household cleansing formulations. Among suitable hydrotropes the following are noteworthy: monopropylene glycol (MPG), glycerol, sodium cumene sulfonate, ethanol, other glycols, e.g. dipropylene glycol, diethers and urea. MPG and glycerol are preferred hydrotropes.

Enzymes

In at least one embodiment, the formulation, particularly the liquid laundry detergent formulation, comprises an enzyme. In at least one embodiment, the enyzme is selected from the group consisting of protease, mannanase, pectate lyase, cutinase, esterase, lipase, amylase, cellulase, and combinations thereof. Less preferred additional enzymes may be selected from peroxidase and oxidase. The enzymes are preferably present with corresponding enzyme stabilizers. The total enzyme content in the formulation is preferably from 0 wt. % to 5 wt.-%, more preferably from 0.5 wt.-% to 5 wt.-%, even more preferably from 1 wt.-% to 4 wt.-%, by total weight of the formulation.

Sequestrants

Sequestrants are preferably included in the formulation, particularly in the household cleansing formulations. Preferred sequestrants include organic phosphonates, alkanehydroxy phosphonates and carboxylates, for example available under the DEQUEST trade mark from Thermphos. The preferred sequestrant level is less than 10 wt.-% and preferably less than 5 wt.-% by total weight of the formulation. A particularly preferred sequestrant is HEDP (1-hydroxyethylidene-1,1-diphosphonic acid), for example sold as Dequest 2010. Also suitable is Dequest® 2066 (diethylenetriamine penta(methylene-phosphonic acid) or Heptasodium DTPMP).

Buffers

In at least one embodiment, the formulation, particularly the liquid laundry detergent formulation, comprises a buffer. In addition to agents optionally included for the generation of anionic surfactants, e.g. from LAS or fatty acids, the presence of buffer is preferred for pH control. Possible buffers are one or more ethanolamines, e.g. monoethanolamine (MEA) or triethanolamine (TEA). They are preferably used in formulation at levels of from 1.0 wt.-% to 15 wt.-%. Other suitable amino alcohol buffer materials may be selected from the group consisting of compounds having a molecular weight above 61 g/mol, which includes MEA. Suitable materials also include, in addition to the already mentioned materials: monoisopropanolamine, diisopropanolamine, triisopropanolamine, monoamino hexanol, 2-[(2-methoxyethyl)methylamino]-ethanol, propanolamine, N-methylethanolamine, diethanolamine, monobutanolamine, isobutanolamine, monopentanolamine, 1-amino-3-(2-methoxyethoxy)-2-propanol, 2-methyl-4-(methylamino)-2-butanol, or mixtures thereof. Potential alternatives to amino ethanol buffers are alkali hydroxides such as sodium hydroxide or potassium hydroxide.

Seventh Aspect

A seventh aspect relates to a compound X, wherein compound X is according to Formula (I):

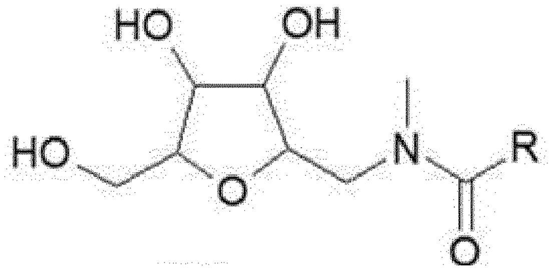

(I)

wherein R is selected from saturated hydrocarbon chains having 11 to 23 carbon atoms, unsaturated hydrocarbon chains having 11 to 23 carbon atoms, - $(CH_2)_7CH=CH_2$, and mixtures thereof; or wherein the R-C=O residue in Formula (I) is derived from coconut fatty acids.

In at least one embodiment, R in Formula (I) is selected from $-(CH_2)_{10}CH_3$, - $(CH_2)_{12}CH_3$, and mixtures thereof; or

R in Formula (I) is selected from $-(CH_2)_7CH=CH_2$, $-(CH_2)_7CH=CHCH_2CH_3$, and mixtures thereof; or
the R-C=O residue in Formula (I) is derived from coconut fatty acids.

In at least one embodiment, R in Formula (I) is selected from $-(CH_2)_{10}CH_3$, - $(CH_2)_{12}CH_3$, and mixtures thereof. In at least one embodiment, R in Formula (I) is selected from $-(CH_2)_7CH=CH_2$, $-(CH_2)_7CH=CHCH_2CH_3$, and mixtures thereof. In at least one embodiment, the R-C=O residue in Formula (I) is derived from coconut fatty acids. In at least one embodiment, the R-C=O residue in Formula (I) is derived from soybean fatty acids.

In at least one embodiment, compound X comprises (preferably is) a mixture of compounds according to Formula (I) wherein R is $-(CH_2)_{10}CH_3$ and $-(CH_2)_{12}CH_3$, respectively. In other words, in at least one embodiment, compound X comprises (preferably is) a mixture of compounds according to Formula (I) wherein R is - $(CH_2)_{10}CH_3$ and compounds according to Formula (I) wherein R is $-(CH_2)_{12}CH_3$. Preferably, the weight ratio of compounds according to Formula (I) wherein R is - $(CH_2)_{10}CH_3$ and compounds according to Formula (I) wherein R is $-(CH_2)_{12}CH_3$ is from 3:7 to 7:3, more preferably from 4:6 to 6:4. Also preferably, the weight ratio of compounds according to Formula (I) wherein R is $-(CH_2)_{10}CH_3$ and compounds according to Formula (I) wherein R is $-(CH_2)_{12}CH_3$ is from 4:1 to 1:1, more preferably from 3:1 to 2:1, even more preferably from 2.5:1.0 to 2.0:1.0, for example 7:3.

In at least one embodiment, compound X comprises (preferably is) a mixture of compounds according to Formula (I) wherein R is $-(CH_2)_7CH=CH_2$ and - $(CH_2)_7CH=CHCH_2CH_3$, respectively. In other words, in at least one embodiment, compound X comprises (preferably is) a mixture of compounds according to Formula (I) wherein R is $-(CH_2)_7CH=CH_2$ and compounds according to Formula (I) wherein R is $-(CH_2)_7CH=CHCH_2CH_3$. Preferably, the weight ratio of compounds according to Formula (I) wherein R is $-(CH_2)_7CH=CH_2$ and compounds according to Formula (I) wherein R is $-(CH_2)_7CH=CHCH_2CH_3$ is from 3:7 to 7:3, more preferably from 4:6 to 6:4.

EXAMPLES

The examples which follow are intended to illustrate the subject matter of the invention without restricting it thereto.

Synthesis example of the compound X of the first aspect:
Synthesis of Dodecanoyl/Tetradecanoyl cyclic N-Methyl glucamide: 0.5 mol of a 60 % aqueous N-Methylglucamine (NMG) solution is weighed into the reaction flask. While stirring, this solution is heated up to 135°C to evaporate water. The pressure is gradually reduced to 20 mbar. Afterwards the temperature is increased to 160°C and vacuum is broken with nitrogen.

A mixture of 0.485 mol C12/C14 fatty acid and 0.001 mol phosphonic acid (70%) is slowly added to the hot melt of N-Methylglucamine to avoid foaming and gel phases. With a moderate stream of nitrogen, the reaction mixture is stirred at 160°C for 4 h. A first amount of water is distilling off.

The laboratory trial is then interrupted in order to manage the next reaction step within one working day. Therefore, the batch is cooled down to ambient temperature and stored under nitrogen. The cooling down phase can be skipped in plant where overnight operation is possible.

Before starting the batch again 0.003 mol of phosphonic acid (70%) is added. The whole apparatus is evacuated 3 times and released to ambient pressure with nitrogen. Then the reaction is heated up to 160°C. Afterwards pressure is reduced gradually to 50 mbar. When 50 mbar are reached, the reaction is carried on at 160°C until the content of fatty acid is < 1% according to the titrated acid number.

Table 1: Example compositions of the first aspect

| | Example | | | | | | | | |
|---|---|---|---|---|---|---|---|---|---|
| | 1 | 2 | 3 | 4 | 5 | 6 | 7 | 8 | 9 |
| * N-Lauroyl-N-methyl cyclic glucamide | - | 92 | 15 | - | 70 | 35 | 85 | 40 | - |
| # N-Myristoyl-N-methyl cyclic glucamide | 60 | - | 15 | 92 | 30 | 47 | - | 40 | 30 |
| A compound according to Formula (2) and/or (3) | - | - | - | - | - | 8 | - | 1 | 5 |
| Other by-products | - | 8 | - | 8 | - | 10 | 5 | 4 | 2 |
| Water | 40 | - | 70 | - | - | - | 10 | 15 | 63 |
| Total [%] | 100 | 100 | 100 | 100 | 100 | 100 | 100 | 100 | 100 |
| KEY:<br>* = compound according to Formula (I), wherein R is $-(CH_2)_{10}CH_3$;<br># = compound according to Formula (I), wherein R is $-(CH_2)_{12}CH_3$. | | | | | | | | | |

Table 2a: Example concentrates of the third aspect

| Example | 10a | 11a | 12a | 13a | 14a | 15a | 16a | 17a | 18a | 19a | 20a | 21a | 22a | 23a | 24a |
|---|---|---|---|---|---|---|---|---|---|---|---|---|---|---|---|
| *N-Lauroyl-N-Methyl-Glucamide | 45 | 15 | 30 | 30 | 25 | 25 | 20 | - | 65 | 30 | 20 | 30 | 20 | 40 | 30 |
| #N-Myristoyl-N-Methyl-Glucamide | 45 | 15 | 30 | 30 | 25 | 25 | 20 | 65 | - | 30 | 40 | 65 | 40 | 20 | 30 |
| Octopirox | 10 | - | - | - | - | - | - | - | - | - | - | - | - | 5 | - |
| Phenoxyethanol | - | 70 | - | - | - | - | - | - | - | - | - | - | - | - | - |
| Benzyl Alcohol | - | - | 40 | - | - | - | - | - | - | 25 | - | - | - | - | - |
| Phenethyl Alcohol | - | - | - | 40 | - | - | - | - | - | - | - | - | - | 5 | - |
| Benzoic Acid | - | - | - | - | 20 | - | - | - | 15 | - | - | - | - | - | - |
| Sodium Benzoate | - | - | - | - | - | - | - | - | - | - | 20 | - | - | - | - |
| Sorbic Acid | - | - | - | - | - | 20 | - | - | 15 | - | - | - | - | - | - |
| Potassium Sorbate | - | - | - | - | - | - | - | 25 | - | - | - | - | - | - | - |
| Dehydroacetic Acid | - | - | - | - | - | - | - | - | - | 14 | - | - | - | - | - |
| Tocopherol | - | - | - | - | - | 1 | - | 1 | - | 1 | - | 0.5 | - | 0.5 | - |
| p-Anisic Acid | - | - | - | - | - | - | - | - | - | - | - | - | 20 | 10 | - |
| Benzisothiazolone (BIT) | - | - | - | - | - | - | - | - | - | - | - | - | - | - | 2 |
| Perfume | - | - | - | - | - | - | 5 | - | - | - | - | 4.5 | - | 5 | - |
| Propanediol | - | - | - | - | 15 | 14 | 20 | - | 5 | - | 10 | - | 15 | - | - |
| Glycerine | - | - | - | - | - | 15 | 30 | - | - | - | - | - | - | 14.5 | - |
| Water | - | - | - | - | 15 | - | 5 | 9 | - | - | 10 | - | 5 | - | 38 |
| Total (%) | 100 | 100 | 100 | 100 | 100 | 100 | 100 | 100 | 100 | 100 | 100 | 100 | 100 | 100 | 100 |

KEY for Table 2a:
* = compound according to Formula (I), wherein R is $-(CH_2)_{10}CH_3$;
\# = compound according to Formula (I), wherein R is $-(CH_2)_{12}CH_3$.

Table 2b: Example concentrates of the third aspect

| Example | 10b | 11b | 12b | 13b | 14b | 15b | 16b | 17b | 18b | 19b | 20b | 21b | 22b | 23b | 24b |
|---|---|---|---|---|---|---|---|---|---|---|---|---|---|---|---|
| **N-Decenoyl-N-Methyl-Glucamide | 45 | 15 | 30 | 30 | 25 | 25 | 20 | - | 65 | 30 | 20 | 30 | 20 | 40 | 30 |
| ##N-Dodecenoyl-N-Methyl-Glucamide | 45 | 15 | 30 | 30 | 25 | 25 | 20 | 65 | - | 30 | 40 | 65 | 40 | 20 | 30 |
| Octopirox | 10 | - | - | - | - | - | - | - | - | - | - | - | - | 5 | - |
| Phenoxyethanol | - | 70 | - | - | - | - | - | - | - | - | - | - | - | - | - |
| Benzyl Alcohol | - | - | 40 | - | - | - | - | - | - | 25 | - | - | - | - | - |
| Phenethyl Alcohol | - | - | - | 40 | - | - | - | - | - | - | - | - | - | 5 | - |
| Benzoic Acid | - | - | - | - | 20 | - | - | - | 15 | - | - | - | - | - | - |
| Sodium Benzoate | - | - | - | - | - | - | - | - | - | - | 20 | - | - | - | - |
| Sorbic Acid | - | - | - | - | - | 20 | - | - | 15 | - | - | - | - | - | - |
| Potassium Sorbate | - | - | - | - | - | - | - | 25 | - | - | - | - | - | - | - |
| Dehydroacetic Acid | - | - | - | - | - | - | - | - | - | 14 | - | - | - | - | - |
| Tocopherol | - | - | - | - | - | 1 | - | 1 | - | 1 | - | 0.5 | - | 0.5 | - |
| p-Anisic Acid | - | - | - | - | - | - | - | - | - | - | - | - | 20 | 10 | - |
| Benzisothiazolone (BIT) | - | - | - | - | - | - | - | - | - | - | - | - | - | - | 2 |
| Perfume | - | - | - | - | - | - | 5 | - | - | - | - | 4.5 | - | 5 | - |
| Propanediol | - | - | - | - | 15 | 14 | 20 | - | 5 | - | 10 | - | 15 | - | - |
| Glycerine | - | - | - | - | - | 15 | 30 | - | - | - | - | - | - | 14.5 | - |
| Water | - | - | - | - | 15 | - | 5 | 9 | - | - | 10 | - | 5 | - | 38 |
| Total (%) | 100 | 100 | 100 | 100 | 100 | 100 | 100 | 100 | 100 | 100 | 100 | 100 | 100 | 100 | 100 |

KEY for Table 2b:
** = compound according to Formula (I), wherein R is $-(CH_2)_7CH=CH_2$;
## = compound according to Formula (I), wherein R is $-(CH_2)_7CH=CHCH_2CH_3$.

Table 2c: Example concentrates of the third aspect

| Example | 10c | 11c | 12c | 13c | 14c | 15c | 16c | 17c | 18c | 19c | 20c | 21c | 22c | 23c | 24c |
|---|---|---|---|---|---|---|---|---|---|---|---|---|---|---|---|
| ***N-Cocoyl-N-Methyl-Glucamide | 90 | 30 | 60 | 60 | 50 | 50 | 40 | 65 | 65 | 60 | 60 | 95 | 60 | 60 | 60 |
| Octopirox | 10 | - | - | - | - | - | - | - | - | - | - | - | - | 5 | - |
| Phenoxyethanol | - | 70 | - | - | - | - | - | - | - | - | - | - | - | - | - |
| Benzyl Alcohol | - | - | 40 | - | - | - | - | - | - | 25 | - | - | - | - | - |
| Phenethyl Alcohol | - | - | - | 40 | - | - | - | - | - | - | - | - | - | 5 | - |
| Benzoic Acid | - | - | - | - | 20 | - | - | - | 15 | - | - | - | - | - | - |
| Sodium Benzoate | - | - | - | - | - | - | - | - | - | - | 20 | - | - | - | - |
| Sorbic Acid | - | - | - | - | - | 20 | - | - | 15 | - | - | - | - | - | - |
| Potassium Sorbate | - | - | - | - | - | - | - | 25 | - | - | - | - | - | - | - |
| Dehydroacetic Acid | - | - | - | - | - | - | - | - | - | 14 | - | - | - | - | - |
| Tocopherol | - | - | - | - | - | 1 | - | 1 | - | 1 | - | 0.5 | - | 0.5 | - |
| p-Anisic Acid | - | - | - | - | - | - | - | - | - | - | - | - | 20 | 10 | - |
| Benzisothiazolone (BIT) | - | - | - | - | - | - | - | - | - | - | - | - | - | - | 2 |
| Perfume | - | - | - | - | - | - | 5 | - | - | - | - | 4.5 | - | 5 | - |
| Propanediol | - | - | - | - | 15 | 14 | 20 | - | 5 | - | 10 | - | 15 | - | - |
| Glycerine | - | - | - | - | - | 15 | 30 | - | - | - | - | - | - | 14.5 | - |
| Water | - | - | - | - | 15 | - | 5 | 9 | - | - | 10 | - | 5 | - | 38 |
| Total (%) | 100 | 100 | 100 | 100 | 100 | 100 | 100 | 100 | 100 | 100 | 100 | 100 | 100 | 100 | 100 |

KEY for Table 2c:
*** = compound according to Formula (I), wherein the R-C=O residue in Formula (I) is derived from coconut fatty acids.

Table 3: Example formulations of the sixth aspect

| | Example | | | | |
|---|---|---|---|---|---|
| | 25 | 26 | 27 | 28a | 28b |
| Formulation | Liquid soap | Body wash | Wet wipe lotion | Shampoo | Shampoo |
| Concentrate of example 10a[1] | - | - | - | - | 2 |
| Concentrate of example 13a[1] | - | - | - | 1.5 | - |
| Concentrate of example 14a[1] | - | 2 | - | - | - |
| Composition 5[2] | 1.5 | - | 1.0 | - | - |
| SLES | 10 | - | - | - | 9 |
| Cocamidopropylbetaine | 2 | 4.5 | - | - | 2 |
| Cocamide MEA | - | - | - | - | 1 |
| Sodium Cocoyl Glutamate | - | 2 | 1 | 2 | - |
| Sodium Cocoyl Glycinate | - | 2 | 1 | 2 | - |
| Sodium Cocoyl Isethionate | - | 2 | | - | - |
| Cocoyl Methyl Glucamide | - | 3 | 2 | - | - |
| EGDS | - | 0.5 | - | - | 0.7 |
| PEG-7 Glyceryl Cocoate | - | - | 1 | - | - |
| Cocoyl Glucoside | - | - | - | 5 | - |
| Lauryl Glucoside | - | - | - | 5 | - |
| Acrylates Copolymer | - | - | - | 2 | - |
| Glycerine | - | - | - | 1 | 2 |
| Panthenol | - | - | - | 0.2 | 0.2 |
| Dimethicone | - | - | - | - | - |
| Polyquaternium 7 (PQ-7) | - | - | - | - | 0.6 |
| Guar Hydroxypropyltrimonium Chloride | - | - | - | - | 0.3 |
| Hydrolyzed Protein | - | - | - | - | 0.1 |
| Perfume | 0.2 | 0.2 | 0.1 | - | 0.8 |
| NaCl | 1.5 | 1.0 | 0.5 | 0.3 | 1.5 |
| Water | QSP | QSP | QSP | QSP | QSP |
| Total | 100 % | 100 % | 100 % | 100 % | 100 % |
| KEY:<br>[1] = see Table 2a above;<br>[2] = see Table 1 above. | | | | | |

Table 3: Example formulations of the sixth aspect (continued)

| | Example | | | | |
|---|---|---|---|---|---|
| | 29 | 30 | 31 | 32 | 33 |
| Formulation | § | § | § | § | § |
| Concentrate of example 11a[1] | - | - | - | - | 2 |
| Concentrate of example 14a[1] | - | - | - | 1.5 | - |

(continued)

| | Example | | | | |
|---|---|---|---|---|---|
| | 29 | 30 | 31 | 32 | 33 |
| Concentrate of example 15a[1] | - | 2 | - | - | - |
| Concentrate of example 24a[1] | 2 | - | 1.0 | - | - |
| Sodium Lauryl Ether Sulfate (SLES) | 18 | 18 | 19 | 8 | - |
| Cocamidopropylbetaine | 8 | - | - | 4 | - |
| Sodium Alkane Sulfonate | - | - | - | 24 | - |
| Lauryldimethylamine oxide | - | - | 6 | - | 5 |
| Ethanol | 7 | 4 | - | - | - |
| Coco-Glucamide | - | 8 | - | - | - |
| Perfume | 0.2 | 0.2 | 0.1 | 0.1 | 0.8 |
| Cumene Sulfonate | - | - | 1.5 | - | - |
| Alpha-Olefine Sulfonate (Na salt) | - | - | - | - | 15 |
| Water & Auxiliaries | QSP | QSP | QSP | QSP | QSP |
| Total | 100 % | 100 % | 100 % | 100 % | 100 % |
| KEY:<br>[1] = see Table 2a above;<br>§ = hand dishwashing formulation. | | | | | |

Table 3: Example formulations of the sixth aspect (continued)

| | Example | | | |
|---|---|---|---|---|
| | 34 | 35 | 36 | 37 |
| Formulation | Body lotion | Intensive hand and body lotion | Anti-ageing night cream | Baby cream |
| Concentrate of example 10a[1] | - | - | - | - |
| Concentrate of example 13a[1] | - | - | - | 1.5 |
| Concentrate of example 14a[1] | - | 2 | - | - |
| One of compositions 1 to 9[2] | 1.5 | - | 1.0 | - |
| Ethylhexyl Stearate | 7 | - | - | - |
| Decyl Oleate | 5 | - | - | - |
| Plantasens® Natural Emulsifier HE 20 (Clariant), which is Cetearyl Glucoside (and) Sorbitan Olivate | 3 | - | - | - |
| Dimethicone | 2 | - | - | - |
| Glycerine | 3 | 3 | 7 | - |
| Xanthan Gum | 0.2 | - | - | - |
| Aristoflex® AVC from Clariant (Ammonium Acryloyldimethyltaurate/ VP Copolymer) | 0.5 | 1 | - | - |
| Fragrance | 0.3 | - | 0.3 | 0.3 |
| Polyglyceryl-2-Sesquiisostearate | - | 0.5 | - | 2 |
| Trilaureth-4 Phosphate | - | 2 | - | - |

(continued)

| | Example | | | |
|---|---|---|---|---|
| | 34 | 35 | 36 | 37 |
| Formulation | Body lotion | Intensive hand and body lotion | Anti-ageing night cream | Baby cream |
| Mineral Oil (Paraffinum Liquidum) | - | 5 | - | - |
| Plantasens® Refined Organic Babassu Butter from Clariant (Orbignya Oleifera Seed Oil) | - | 2 | - | - |
| Squalane | - | 2 | 12 | - |
| Macadamia Ternifolia Seed Oil (and) Crambe Abyssinica Seed Oil (and) Orbignya Oleifera Seed Oil | - | 2 | - | - |
| Silcare® Silicone SEA from Clariant (Trideceth-9 PG-Amodimethicone and Trideceth-12) | - | 0.5 | - | - |
| Cetearyl Alcohol | - | 2 | - | - |
| Isopropyl Palmitate | - | 4 | - | - |
| Dow Corning® 345 (Cyclopentasiloxane and Cyclohexasiloxane) | - | - | 10 | - |
| Paraffin Oil, low viscosity | - | - | 4 | 10 |
| Petrolatum | - | - | 4 | 15 |
| Cetyl Alcohol | - | - | 3 | - |
| Cutina® GMS (Glyceryl Stearate) | - | - | 2.5 | - |
| PEG-40 Stearate | - | - | 3 | - |
| Cera Alba Wax | - | - | 2 | - |
| Mangifera Indica (Mango) Seed Butter | - | - | 2 | - |
| Abyssinian Oil (and) Phytosterols (and) Olea Europea (Olive) Oil Unsaponifiables | - | - | 0.5 | - |
| Sorbitan Tristearate | - | - | 0.3 | - |
| Ubiquinone | - | - | 0.05 | - |
| Aristoflex® Velvet from Clariant (Polyacrylate Crosspolymer-11) | - | - | 0.3 | - |
| Hostacerin® SFO from Clariant (Sunflower Seed Oil Sorbitol Esters) | - | - | - | 3.5 |
| Paracera® M (Cera Microcristallina) | - | - | - | 2 |
| Beeswax | - | - | - | 1 |
| Magnesium Stearate | - | - | - | 1 |
| Talc | - | - | - | 10 |
| Zinc Oxide | - | - | - | 10 |
| Allantoin (Clariant) | - | - | - | 0.3 |
| Extrapon Hamamelis | - | - | - | 2 |
| D-Panthenol | - | - | - | 2 |
| Water | QSP | QSP | QSP | QSP |

(continued)

| | Example | | | |
|---|---|---|---|---|
| | 34 | 35 | 36 | 37 |
| Formulation | Body lotion | Intensive hand and body lotion | Anti-ageing night cream | Baby cream |
| Total | 100 % | 100 % | 100 % | 100 % |
| KEY:<br>[1] = see Table 2a above;<br>[2] = see Table 1 above. | | | | |

Table 3: Example formulations of the sixth aspect (continued)

| | Example | | | | |
|---|---|---|---|---|---|
| | 38 | 39 | 41 | 42 | 43 |
| Formulation | $ | $ | $ | $ | $ |
| Concentrate of example 11a[1] | - | - | - | 2 | 2 |
| Concentrate of example 14a[1] | - | - | 2 | - | - |
| Concentrate of example 15a[1] | - | 2 | - | - | - |
| One of compositions 1 to 9[2] | 1 | - | - | - | - |
| Sodium Lauryl Ether Sulfate (SLES) | 2 | 2 | 2 | - | - |
| Lauryldimethylamine Oxide | 2 | - | - | - | 2 |
| Alkylbenzenesulfonate | - | - | - | 2 | 2 |
| Laureth-7 | - | - | 2 | 2 | |
| Capric/Caprylic-Glucamide | - | 2 | - | - | - |
| Perfume | 0.2 | 0.2 | 0.1 | 0.1 | 0.8 |
| Water & Auxiliaries | QSP | QSP | QSP | QSP | QSP |
| Total | 100 % | 100 % | 100 % | 100 % | 100 % |
| KEY:<br>[1] = see Table 2a above;<br>[2] = see Table 1 above;<br>§ = hard surface cleaner. | | | | | |

Table 3: Example formulations of the sixth aspect (continued)

| | Example | | | | |
|---|---|---|---|---|---|
| | 44 | 45 | 46 | 47 | 48 |
| Formulation | & | & | & | & | & |
| Concentrate of example 11a[1] | - | 2 | - | 2 | 2 |
| One of compositions 1 to 9[2] | 1 | - | 1 | - | - |
| Sodium Lauryl Ether Sulfate (SLES) | 10 | 15 | 5 | 15 | 2 |
| Alkylbenzenesulfonate | 10 | 5 | 15 | 0 | 15 |
| Laureth-7 | 10 | 10 | 10 | 10 | 8 |
| $C_{12}/C_{14}$ Fatty Acid Soap | 3 | 3 | 3 | 5 | 5 |

(continued)

| | Example | | | | |
|---|---|---|---|---|---|
| | 44 | 45 | 46 | 47 | 48 |
| Perfume | 0.2 | 0.2 | 0.1 | 0.1 | 0.8 |
| Water & Auxiliaries | QSP | QSP | QSP | QSP | QSP |
| Total | 100 % | 100 % | 100 % | 100 % | 100 % |

KEY:
[1] = see Table 2a above;
[2] = see Table 1 above;
& = liquid laundry detergent formulation.

Table 3: Example formulations of the sixth aspect (continued)

| | Example | | | | | |
|---|---|---|---|---|---|---|
| | 49 | 50 | 51 | 52 | 53 | 54 |
| Formulation | Soap formulation | Soap bar | Body wash | Shampoo | Wash cream | Body wash |
| Concentrate of example 10a[1] | - | - | - | - | 1 | - |
| Concentrate of example 13a[1] | - | - | - | 1.5 | - | 0.8 |
| Concentrate of example 14a[1] | - | 2 | - | - | - | - |
| Composition 5[2] | 1.5 | - | 1.0 | - | - | - |
| Sodium Lauryl Sulfate | - | - | 10 | - | - | - |
| Ammonium Lauryl Sulfate | - | - | - | 12 | - | - |
| Sodium Lauryl Ether Sulfate (SLES) | 15 | - | 2 | - | - | - |
| Cocamidopropylbetaine | 7 | - | 2 | 3 | - | 2 |
| Cocamide MEA | - | - | 1 | - | - | 2 |
| Lauric Acid | 0.5 | 2 | - | - | - | 10 |
| Myristic Acid | 1.5 | 2 | - | - | - | 10 |
| Stearic Acid | 0.5 | 2 | - | - | 10 | - |
| Palmitic Acid | - | 2 | - | - | - | 10 |
| Potassium Tallowate | - | 2 | - | - | - | - |
| Sodium Palm Kernelate | - | 20 | - | - | - | - |
| Sodium Cocoate | - | 60 | - | - | - | - |
| Lauryl Glucoside | - | - | - | 4 | - | - |
| Sodium Cocoyl Isethionate | - | - | - | - | 14 | - |
| Glycerine | - | 5 | - | - | - | 5 |
| Cetearyl Alcohol | 1.5 | - | - | - | 2 | - |
| Dimethicone | - | - | - | - | 0.1 | - |
| Polyquaternium 7 (PQ-7) | - | - | - | 0.2 | - | - |
| Guar Hydroxypropyltrimonium Chloride | - | - | 0.3 | - | - | - |

(continued)

| | Example | | | | | |
|---|---|---|---|---|---|---|
| | 49 | 50 | 51 | 52 | 53 | 54 |
| Formulation | Soap formulation | Soap bar | Body wash | Shampoo | Wash cream | Body wash |
| Hydrolyzed Protein | - | - | - | 0.1 | - | - |
| Perfume | 1 | 0.2 | 0.1 | - | 0.8 | 0.7 |
| NaCl | 1.5 | - | 0.5 | 0.3 | - | 2.5 |
| Water | QSP | QSP | QSP | QSP | QSP | QSP |
| Total | 100% | 100% | 100% | 100% | 100% | 100% |
| KEY:<br>1 = see Table 2a above;<br>2 = see Table 1 above. | | | | | | |

Example methods of use of the formulations:
Examples 28a and 28b in Table 3 are shampoo formulations. Shampoo formulations of the present invention are used in a conventional manner for cleansing and conditioning hair or skin. For example, an effective amount of the composition for cleansing and conditioning the hair or skin is applied to the hair or skin, which has preferably already been wetted with water, and then rinsed off. Such effective amounts generally range from about 1 gram to about 50 grams, preferably from about 1 gram to about 20 grams. Application to the hair typically includes working the composition through the hair such that most or all of the hair is contacted with the composition. For example, cleansing and conditioning the hair or skin comprises the steps of: a) wetting the hair or skin with water, b) applying an effective amount of the shampoo composition to the hair or skin, and c) rinsing the applied areas of skin or hair with water. These steps can be repeated as many times as desired to achieve the desired cleansing and/or conditioning effect.

EXPERIMENTAL

For testing the inhibition of bacteria, the sample was diluted in demineralized water and added in different concentrations to liquid Caso-Agar at 50°C and is buffered to pH 7 (+/- 0.2). For testing the inhibition of yeast and mold, the sample was diluted in demineralized water and added in different concentrations to liquid Sabouraud-4 % Dextrose-Agar at 50°C and is buffered to pH 5.6 (+/- 0.2). Each of the solutions is poured into a petri-dish and inoculated with the same amount of bacteria, yeast or mold respectively. The minimum inhibitory concentration (MIC) is the lowest concentration of the sample that inhibits the growth of the respective microorganism where the next lowest dilution fails to inhibit the growth of said microorganism.

The experiments were carried out in scientifically fair conditions so that a proper comparison can be made and conclusions drawn.

Table 4: MIC data

| Organisms; Bacteria (B), Yeast (Y) and Mold (M) | MIC of C12/C14 cyclic glucamide [ppm] | MIC of Phenoxyethanol [ppm] | MIC of C12/C14 cyclic glucamide with Phenoxyethanol (1:1) [ppm] |
|---|---|---|---|
| Staphylococcus aureus (B) | 250 | 4000 | 250 |
| Penicillium minioluteum (M) | 250 | 500 | 250 |
| Fusarium solani (M) | 500 | 1000 | 500 |
| Penicillium funicolosium (M) | 250 | 500 | 250 |
| Candida parapsilosis (Y) | 10000 | 3000 | 3000 |

KEY: C12/C14 cyclic glucamide = compound according to Formula (I), wherein R is a mixture of $-(CH_2)_{10}CH_3$ and $-(CH_2)_{12}CH_3$ in a ratio of approximately 7:3 C12 and C14 respectively.

Conclusions:
The data shows excellent performance of Compound X towards various microorganisms, both bacteria and fungi.

The structure of Compound X is chemically more stable than comparable market standards (sorbitan caprylate, glyceryl caprylate) versus high/low pH as the amide bond is more stable than an ester bond. This enables use in broader range of formulations across the application areas, without compromising on performance.

The increased water solubility of Compound X is highly appreciated by formulators, because it makes formulating the ingredient easier in all types of formulations containing water. Compound X is less likely to precipitate/cream in the respective formulation, contributing not only to microbiological stability, but also ensures formulation stability.

Compound X has a relatively high Hydrophilic Lipophilic Balance HLB value and this allows its use as a non-ionic emulsifier in emulsions and as a solubiliser for additives in all kinds of formulations.

The data shows the MIC of Compound X, the MIC of Phenoxyethanol and the MIC of a 1:1 mixture of both ingredients towards the listed microorganisms. The MIC test consists of dilution experiments until the growth of the respective organism is inhibited (the lower the MIC, the better). Without any synergistic effect, the mixtures should give a linear interpolation between the values of both neat products. In Table 4 it can be seen that the 1:1 mixture shows a good anti-microbial activity versus all of the organisms. Surprisingly, there is a synergistic effect. The 1:1 mixture is more active than the expected interpolation of the single ingredients. This synergy is beneficial to save preservative and to protect formulations with reduced amount of preservative, as well as having access to preservatives that are too weak to use without a synergistic preservative booster.

## Claims

1. A composition for inhibiting microorganisms wherein the composition comprises at least 30 wt.-% compound X, wherein compound X is according to Formula (I):

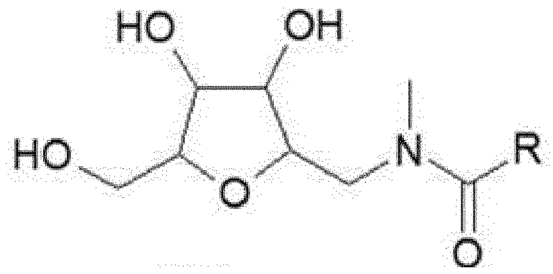
(I)

wherein R is selected from saturated hydrocarbon chains having 11 to 23 carbon atoms, unsaturated hydrocarbon chains having 11 to 23 carbon atoms, $-(CH_2)_7CH=CH_2$, and mixtures thereof; or wherein the R-C=O residue in Formula (I) is derived from coconut fatty acids.

2. The composition according to claim 1, wherein

   R is selected from $-(CH_2)_{10}CH_3$, $-(CH_2)_{12}CH_3$, and mixtures thereof; or
   R is selected from $-(CH_2)_7CH=CH_2$, $-(CH_2)_7CH=CHCH_2CH_3$, and mixtures thereof; or
   the R-C=O residue in Formula (I) is derived from coconut fatty acids.

3. The composition according to claim 1 or 2, wherein the composition comprises at least 40 wt.-%, preferably at least 50 wt.-%, more preferably at least 60 wt.-%, even more preferably at least 70 wt.-% compound X.

4. The composition according to any of claims 1 to 3, wherein the composition comprises a solvent selected from the group consisting of water, glycols, ethanol, and mixtures thereof, preferably water.

5. The composition according to any of claims 1 to 4, wherein the composition, besides compound X, is substantially free of any anti-microbial agent.

6. A process for synthesizing a composition as defined in any of claims 1 to 5, wherein the process comprises:

(a) contacting N-methyl-glucamine with one or more carboxylic acids R-COOH to form a reaction blend;
(b) heating the reaction blend to boil off any water;
(c) allowing the reaction blend to react for at least 1 hour.

**7.** An anti-microbial concentrate comprising:

- compound X, wherein compound X is according to Formula (I):

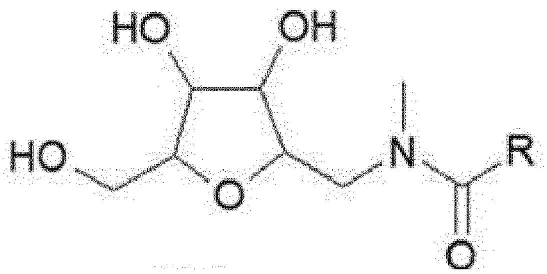

(I)

wherein R is selected from saturated hydrocarbon chains having 11 to 23 carbon atoms, unsaturated hydrocarbon chains having 11 to 23 carbon atoms, $-(CH_2)_7CH=CH_2$, and mixtures thereof; or wherein the R-C=O residue in Formula (I) is derived from coconut fatty acids; and
- an anti-microbial agent.

**8.** The concentrate according to claim 7, wherein

R is selected from $-(CH_2)_{10}CH_3$, $-(CH_2)_{12}CH_3$, and mixtures thereof; or
R is selected from $-(CH_2)_7CH=CH_2$, $-(CH_2)_7CH=CHCH_2CH_3$, and mixtures thereof; or
the R-C=O residue in Formula (I) is derived from coconut fatty acids.

**9.** The concentrate according to claim 7 or 8, wherein the weight ratio of compound X to the anti-microbial agent is from 1:9 to 9:1.

**10.** The concentrate according to any of claims 7 to 9, wherein the anti-microbial agent is a preservative, wherein the preservative is selected from the group consisting of aromatic alcohols, organic acids and salts thereof, hydroxypyridones, alkyl diols, halogenated compounds, isothiazolinones, and mixtures thereof.

**11.** Use of a compound X as a preservative booster, an anti-microbial agent, an emulsifier and/or a solubiliser, wherein compound X is according to Formula (I):

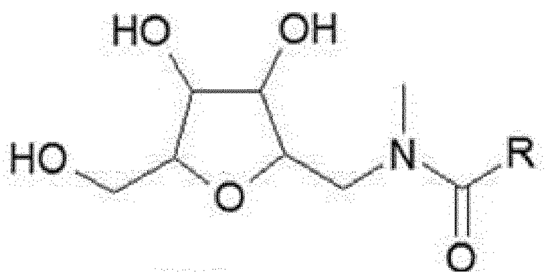

(I)

wherein R is selected from saturated hydrocarbon chains having 11 to 23 carbon atoms, unsaturated hydrocarbon chains having 11 to 23 carbon atoms, $-(CH_2)_7CH=CH_2$, and mixtures thereof; or wherein the R-C=O residue in Formula (I) is derived from coconut fatty acids.

**12.** The use according to claim 11, wherein

R is selected from $-(CH_2)_{10}CH_3$, $-(CH_2)_{12}CH_3$, and mixtures thereof; or
R is selected from $-(CH_2)_7CH=CH_2$, $-(CH_2)_7CH=CHCH_2CH_3$, and mixtures thereof; or
the R-C=O residue in Formula (I) is derived from coconut fatty acids.

**13.** Compound X, wherein compound X is according to Formula (I):

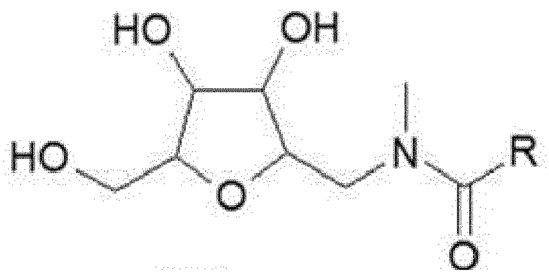

(I)

wherein R is selected from saturated hydrocarbon chains having 11 to 23 carbon atoms, unsaturated hydrocarbon chains having 11 to 23 carbon atoms, $-(CH_2)_7CH=CH_2$, and mixtures thereof; or wherein the R-C=O residue in Formula (I) is derived from coconut fatty acids.

**14.** The compound according to claim 13, wherein

R is selected from $-(CH_2)_{10}CH_3$, $-(CH_2)_{12}CH_3$, and mixtures thereof; or
R is selected from $-(CH_2)_7CH=CH_2$, $-(CH_2)_7CH=CHCH_2CH_3$, and mixtures thereof; or
the R-C=O residue in Formula (I) is derived from coconut fatty acids.

**15.** A method of reducing the effects of microorganisms in a formulation, wherein the method comprises adding a composition as defined in any of claims 1 to 5 or a concentrate as defined in any of claims 7 to 10 or compound X as defined in claim 13 or 14 to the formulation.

Europäisches Patentamt
European Patent Office
Office européen des brevets

# EUROPEAN SEARCH REPORT

Application Number
EP 21 20 0587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2018/002100 A1 (CLARIANT INT LTD [CH]) 4 January 2018 (2018-01-04)<br>* claim 1 *<br>----- | 1-15 | INV.<br>A01N43/08 |
| X | WO 2016/146303 A1 (CLARIANT INT LTD [CH]) 22 September 2016 (2016-09-22)<br>* Samples 3, 4 and 6 *<br>----- | 11-14 | |

TECHNICAL FIELDS SEARCHED (IPC)
A01N

1 The present search report has been drawn up for all claims

| Place of search | Date of completion of the search | Examiner |
|---|---|---|
| Munich | 9 March 2022 | Baston, Eckhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 21 20 0587

This annex lists the patent family members relating to the patent documents cited in the above-mentioned European search report. The members are as contained in the European Patent Office EDP file on
The European Patent Office is in no way liable for these particulars which are merely given for the purpose of information.

09-03-2022

| Patent document cited in search report | Publication date | Patent family member(s) | Publication date |
|---|---|---|---|
| WO 2018002100 A1 | 04-01-2018 | BR 112018077158 A2 | 02-04-2019 |
| | | CN 109640659 A | 16-04-2019 |
| | | EP 3478067 A1 | 08-05-2019 |
| | | EP 3735827 A1 | 11-11-2020 |
| | | ES 2814379 T3 | 26-03-2021 |
| | | JP 6826134 B2 | 03-02-2021 |
| | | JP 2019519567 A | 11-07-2019 |
| | | US 2019224099 A1 | 25-07-2019 |
| | | US 2020261342 A1 | 20-08-2020 |
| | | WO 2018002100 A1 | 04-01-2018 |
| WO 2016146303 A1 | 22-09-2016 | BR 112017011831 A2 | 26-12-2017 |
| | | CA 2980028 A1 | 22-09-2016 |
| | | CN 107429156 A | 01-12-2017 |
| | | CO 2017008545 A2 | 20-10-2017 |
| | | EA 201792064 A1 | 31-01-2018 |
| | | EP 3271439 A1 | 24-01-2018 |
| | | WO 2016146303 A1 | 22-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120100085 A1, Klug
- WO 2018002100 A
- WO 2013017262 A1
- EP 1084696 A1
- US 5104646 A
- EP 0816403 A
- EP 1069142 A
- EP 1116733 A
- DE 102009014877
- EP 1347736 A
- EP 1496081 A
- US 2182306 A
- US 3033746 A
- US 2208095 A
- US 2806839 A
- US 2553696 A
- WO 2007138054 A


### Non-patent literature cited in the description


- International Cosmetic Ingredient Dictionary. 1993
- CTFA Cosmetic Ingredient Handbook. 1992